(19) Europäisches Patentamt
European Patent Office
Office européen des brevets

(11) EP 3 279 775 A1

(12) EUROPEAN PATENT APPLICATION
published in accordance with Art. 153(4) EPC

(43) Date of publication:
07.02.2018 Bulletin 2018/06

(51) Int Cl.:
G06F 3/041 (2006.01)

(21) Application number: 15887638.3

(86) International application number:
PCT/JP2015/060432

(22) Date of filing: 02.04.2015

(87) International publication number:
WO 2016/157491 (06.10.2016 Gazette 2016/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Fujitsu Limited
Kawasaki-shi, Kanagawa 211-8588 (JP)

(72) Inventors:
• HOSHI, Masahiko
Kawasaki-shi
Kanagawa 211-8588 (JP)
• KOHEI, Toru
Kawasaki-shi
Kanagawa 211-8588 (JP)

(74) Representative: Haseltine Lake LLP
Lincoln House, 5th Floor
300 High Holborn
London WC1V 7JH (GB)

(54) **ELECTRONIC APPARATUS, COORDINATE DETECTION UNIT, AND ADHERANCE MEMBER**

(57) An electronic device, a coordinate detecting unit, and an adhesive member are provided such that favorable vibration characteristics are obtained. An electronic device includes a display part; a top panel disposed on a display surface side of the display part and having a manipulation surface; a coordinate detector configured to detect coordinates of a manipulation input performed on the manipulation surface; a vibrating element configured to generate a vibration at the manipulation surface; a drive controlling part configured to drive the vibrating element by using a driving signal for generating a natural vibration at the manipulation surface, the drive controlling part being configured to drive the vibrating element such that an intensity of the natural vibration changes in accordance with a position of the manipulation input performed on the manipulation surface and in accordance with a degree of time change of the position; and a housing to which the top panel is attached, wherein the top panel is fixed to the housing along an edge side of the top panel, and a first fixing force at first positions where antinodes of the natural vibration occur is smaller than a second fixing force at second positions where nodes of the natural vibration occur.

FIG.11

## Description

### Technical Field

The present invention relates to an electronic device, a coordinate detecting unit, and an adhesive member.

### Background Art

Conventionally, there exists an electronic device including a base; a panel; a support for supporting the panel with respect to the base; and a vibrator for vibrating the panel at a predetermined frequency. The support includes a first region located at a part for a node of vibration of the panel, and a second region located at a part other than the node of the vibration of the panel. Rigidity in the first region is smaller than rigidity in the second region of the support (for example, see Patent Document 1).

### Related-Art Documents

### Patent Document

[Patent Document 1] Japanese Patent No. 5343179

### Summary of the Invention

### Problem to be Solved by the Invention

Here, in the conventional electronic device, the rigidity of the first region at the part for the node is smaller than the rigidity of the second region at the part other than the node. That is, the rigidity at the node where amplitude is substantially zero is lower than the rigidity at the part other than the node.
Hence, in the conventional electronic device, favorable vibration characteristics are not obtained possibly.
Thus, an object is to provide an electronic device, a coordinate detecting unit, and an adhesive member such that favorable vibration characteristics are obtained.

### Means to Solve the Problem

According to an embodiment of the present invention, an electronic device includes a display part; a top panel disposed on a display surface side of the display part and having a manipulation surface; a coordinate detector configured to detect coordinates of a manipulation input performed on the manipulation surface; a vibrating element configured to generate a vibration at the manipulation surface; a drive controlling part configured to drive the vibrating element by using a driving signal for generating a natural vibration at the manipulation surface, the drive controlling part being configured to drive the vibrating element such that an intensity of the natural vibration changes in accordance with a position of the manipulation input performed on the manipulation surface and in accordance with a degree of time change of the position; and a housing to which the top panel is attached, wherein the top panel is fixed to the housing along an edge side of the top panel, and a first fixing force at first positions where antinodes of the natural vibration occur is smaller than a second fixing force at second positions where nodes of the natural vibration occur.

### Advantage of the Invention

It is possible to provide an electronic device, a coordinate detecting unit, and an adhesive member such that favorable vibration characteristics are obtained.

### Brief Description of the Drawings

FIG. 1 is a perspective view illustrating an electronic device according to a first embodiment;
FIG. 2 is a plan view illustrating the electronic device according to the first embodiment;
FIG. 3 is a cross-sectional view of the electronic device taken along a line A-A of FIG. 2;
FIG. 4 is a diagram illustrating crests formed in parallel with a short side of a top panel included in a standing wave generated at the top panel by a natural vibration in an ultrasound frequency band;

FIG. 5 is a diagram illustrating cases where a kinetic friction force applied to a user's fingertip performing a manipulation input is varied by the natural vibration in the ultrasound frequency band generated at the top panel of the electronic device;

FIG. 6 is a diagram illustrating a configuration of the electronic device according to the first embodiment;

FIG. 7 is a diagram illustrating first data and second data stored in a memory;

FIG. 8 is a flowchart illustrating a process that is executed by a drive controlling part of a drive controlling apparatus of the electronic device according to the first embodiment;

FIG. 9 is an exploded perspective view illustrating the electronic device according to the first embodiment;

FIG. 10 is a diagram illustrating a planar positional relationship between elements of the electronic device according to the first embodiment;

FIG. 11 is an enlarged view of a portion enclosed by a broken line of FIG. 10;

FIG. 12 is a diagram illustrating a standing wave generated at the top panel of the electronic device;

FIG. 13 is a diagram illustrating a relationship between frequencies of driving signals and waveforms of standing waves;

FIG. 14 is a diagram illustrating a variation example of the first embodiment;

FIG. 15 is a diagram illustrating a variation example of the first embodiment;

FIG. 16 is a diagram illustrating a variation example of the first embodiment;

FIG. 17 is a diagram illustrating a variation example of the first embodiment;

FIG. 18 is an exploded perspective view illustrating an electronic device according to a second embodiment;

FIG. 19 is a cross-sectional view taken along a line B-B of FIG. 18;

FIG. 20 is a cross-sectional view taken along a line C-C of FIG. 18;

FIG. 21 is a diagram illustrating a positional relationship between elements of the electronic device according to the second embodiment;

FIG. 22 is a plan view illustrating a housing of the electronic device according to the second embodiment;

FIG. 23 is an enlarged view of a part of FIG. 22;

FIG. 24 is a diagram illustrating a cross sectional structure of a part of the electronic device according to the second embodiment;

FIG. 25 is a diagram illustrating a standing wave generated at the top panel of the electronic device according to the second embodiment;

FIG. 26 is a diagram illustrating a cross sectional structure of a part of the electronic device according to the second embodiment;

FIG. 27 is a diagram illustrating a variation example of the second embodiment;

FIG. 28 is a diagram illustrating the variation example of the second embodiment;

FIG. 29 is a diagram illustrating a variation example of the second embodiment;

FIG. 30 is a diagram illustrating the variation example of the second embodiment;

FIG. 31 is a diagram illustrating a variation example of the second embodiment; and

FIG. 32 is a diagram illustrating the variation example of the second embodiment.

**[Mode for Carrying Out the Invention]**

Hereinafter, embodiments to which an electronic device, a coordinate detecting unit, and an adhesive member of the present invention are applied will be described.

<First embodiment>

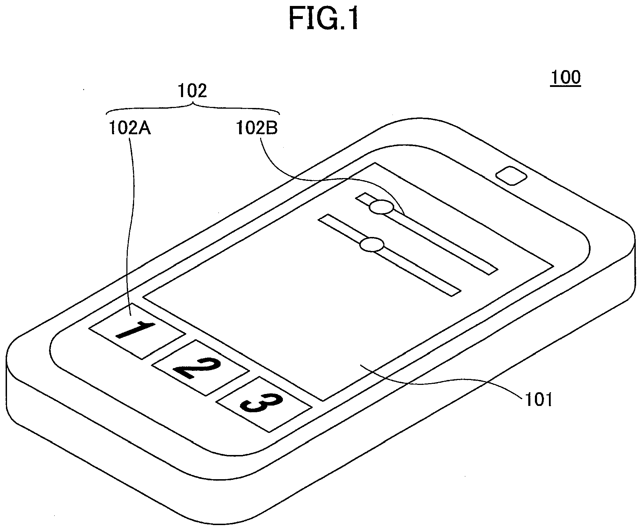

First, an electronic device 100 according to a first embodiment will be described with reference to FIG. 1 to FIG. 8.

FIG. 1 is a perspective view illustrating the electronic device 100 according to the first embodiment.

For example, the electronic device 100 is a smartphone terminal device or a tablet computer that has a touch panel as a manipulation input part. The electronic device 100 may be any device as long as the device has a touch panel as a manipulation input part. Accordingly, the electronic device 100 may be a device such as a portable-type information terminal device, or an Automatic Teller Machine (ATM) placed at a specific location to be used, for example.

For a manipulation input part 101 of the electronic device 100, a display panel is disposed under a touch panel, and various buttons including a button 102A, a slider 102B, or the like (hereinafter referred to as Graphic User Interface (GUI) manipulation part(s) 102) are displayed on the display panel.

A user of the electronic device 100 ordinarily touches the manipulation input part 101 by his or her fingertip (s) in order to manipulate the GUI manipulation part 102.

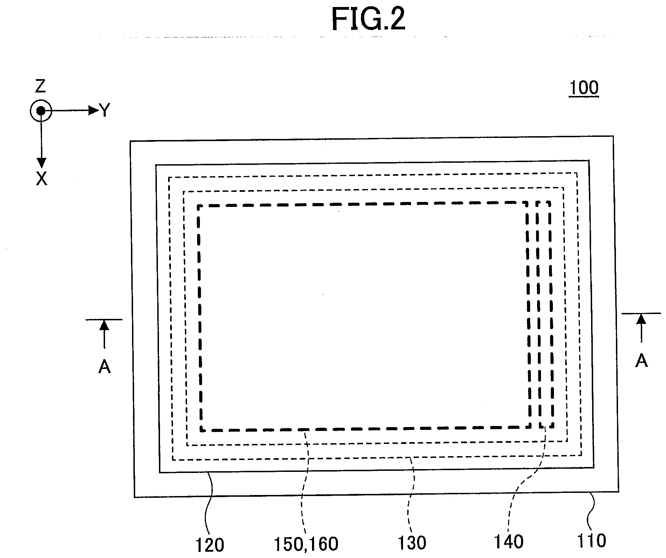

Next, a detailed configuration of the electronic device 100 will be described with reference to FIG. 2.

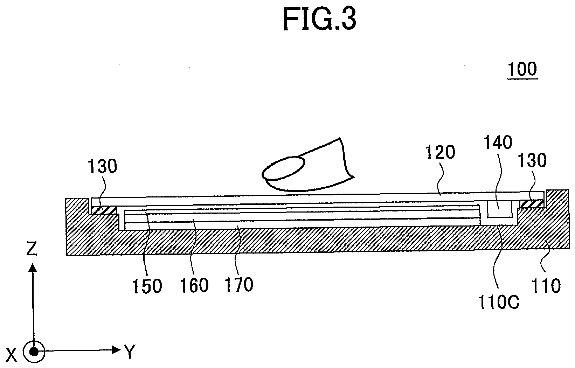

FIG. 2 is a plan view illustrating the electronic device 100 of the first embodiment. FIG. 3 is a diagram illustrating a cross-sectional view of the electronic device 100 taken along a line A-A of FIG. 2. It should be noted that an XYZ coordinate system that is an orthogonal coordinate system is defined as illustrated in FIGS. 2 and 3.

The electronic device 100 includes a housing 110, the top panel 120, a double-faced adhesive tape 130, a vibrating element 140, the touch panel 150, the display panel 160, and a substrate 170.

The housing 110 is made of a plastic, for example. As illustrated in FIG. 3, the substrate 170, the display panel 160 and the touch panel 150 are disposed in a recessed part 110C of the housing 110, and the top panel 120 is bonded on the housing 110 by the double-faced adhesive tape 130.

The top panel 120 is a thin flat-plate member having a rectangular shape in plan view, and is made of transparent glass or a reinforced plastic such as polycarbonate. A surface of the top panel 120 (a positive side surface in the Z axis direction) is one example of a manipulation surface on which the user of the electronic device 100 performs a manipulation input.

The vibrating element 140 is bonded on a negative side surface of the top panel 120 in the Z axis direction, and the four sides in plan view of the top panel 120 are bonded on the housing 110 by the double-faced adhesive tape 130. It should be noted that the double-faced adhesive tape 130 is not necessarily a rectangular-ring-shaped member in plan view as illustrated in FIG. 3, as long as the double-faced adhesive tape 130 can bond the four sides of the top panel 120 to the housing 110.

The touch panel 150 is disposed on the negative side in the Z axis direction of the top panel 120. The top panel 120 is provided in order to protect the surface of the touch panel 150. It should be noted that another panel, protection film or the like may be provided on the surface of the top panel 120.

In a state in which the vibrating element 140 is bonded on the negative side surface of the top panel 120 in the Z axis direction, the top panel 120 is vibrated by driving the vibrating element 140. In the first embodiment, a standing wave is generated at the top panel 120 by causing the top panel 120 to vibrate at a natural vibration frequency of the top panel 120. However, because the vibrating element 140 is bonded on the top panel 120, it is preferable to determine the natural vibration frequency in consideration of a weight of the vibrating element 140 and the like, in practice.

The vibrating element 140 is bonded on the negative side surface of the top panel 120 in the Z axis direction, at a positive side in the Y axis direction, along the short side extending in the X axis direction. The vibrating element 140 may be any element as long as it can generate vibration in an ultrasound frequency band. A piezoelectric element such as a piezo element may be used as the vibrating element 140, for example.

The vibrating element 140 is driven in accordance with a driving signal output from a drive controlling part which will be described later. A frequency and an amplitude (intensity) of the vibration generated by the vibrating element 140 are set by the driving signal. Further, on/off of the vibrating element 140 is controlled in accordance with the driving signal.

It should be noted that the ultrasound frequency band is a frequency band that is higher than or equal to approximately 20 kHz, for example. According to the electronic device 100 of the first embodiment, the frequency at which the vibrating element 140 vibrates is equal to a number of vibrations per unit time (frequency) of the top panel 120. Accordingly, the vibrating element 140 is driven in accordance with the driving signal so that the vibrating element 140 vibrates at a number of natural vibrations per unit time (natural vibration frequency) of the top panel 120.

The touch panel 150 is disposed on (the positive side in the Z axis direction of) the display panel 160 and is disposed under (the negative side in the Z axis direction of) the top panel 120. The touch panel 150 is one example of a coordinate detector that detects a position (in the following, the position is referred to as a position of the manipulation input) at which the user of the electronic device 100 touches the top panel 120.

Various Graphic User Interface (GUI) buttons or the like (hereinafter referred to as GUI manipulation part(s)) are displayed on the display panel 160 located under the touch panel 150. Therefore, the user of the electronic device 100 ordinarily touches the top panel 120 by his or her fingertip(s) in order to manipulate the GUI manipulation part.

The touch panel 150 is any coordinate detector as long as it can detect the position of the manipulation input on the top panel 120 performed by the user. The touch panel 150 may be a capacitance type coordinate detector or a resistance film type coordinate detector, for example. Here, the embodiment in which the touch panel 150 is a capacitance type coordinate detector will be described. The capacitance type touch panel 150 can detect the manipulation input performed on the top panel 120 even if there is a clearance gap between the touch panel 150 and the top panel 120.

Also, although the top panel 120 is disposed on the input surface side of the touch panel 150 in the described embodiment, the top panel 120 may be integrated with the touch panel 150. In this case, the surface of the touch panel 150 is equal to the surface of the top panel 120 illustrated in FIGS. 2 and 3, and the surface of the touch panel 150 constitutes the manipulation surface. The top panel 120 illustrated in FIGS. 2 and 3 may be omitted. In this case, the surface of the touch panel 150 constitutes the manipulation surface. In this case, a member having the manipulation surface may be vibrated at a natural vibration frequency of the member.

In a case where the touch panel 150 is of capacitance type, the touch panel 150 may be disposed on the top panel 120. In this case also, the surface of the touch panel 150 constitutes the manipulation surface. Also, in the case where the touch panel 150 is of capacitance type, the top panel 120 illustrated in FIGS. 2 and 3 may be omitted. In this case also, the surface of the touch panel 150 constitutes the manipulation surface. In this case, a member having the manipulation surface may be vibrated at a natural vibration frequency of the member.

The display panel 160 may be a display part that can display an image. The display panel 160 may be a liquid crystal display panel, an organic Electroluminescence (EL) panel or the like, for example. Inside the recessed part 110C of the housing 110, the display panel 160 is arranged on (the positive side in the Z axis direction of) the substrate 170 using a holder or the like whose illustration is omitted.

The display panel 160 is driven and controlled by a driver Integrated Circuit (IC), which will be described later, and displays a GUI manipulation part, an image, characters, symbols, graphics, and/or the like in accordance with an operating state of the electronic device 100.

The substrate 170 is disposed inside the recessed part 110C of the housing 110. The display panel 160 and the touch panel 150 are disposed on the substrate 170. The display panel 160 and the touch panel 150 are fixed to the substrate 170 and the housing 110 by a holder or the like (not shown).

On the substrate 170, a drive controlling apparatus, which will be described later, and circuits and the like that are necessary for driving the electronic device 100 are mounted.

According to the electronic device 100 having the configuration as described above, when the user touches the top panel 120 with his or her fingertip and a movement of the user's fingertip is detected, the drive controlling part mounted on the substrate 170 drives the vibrating element 140 to vibrate the top panel 120 at a frequency in the ultrasound frequency band. This frequency in the ultrasound frequency band is a resonance frequency of a resonance system including the top panel 120 and the vibrating element 140 and generates a standing wave at the top panel 120.

The electronic device 100 generates standing waves in the ultrasound frequency band to provide tactile sensations to the user through the top panel 120.

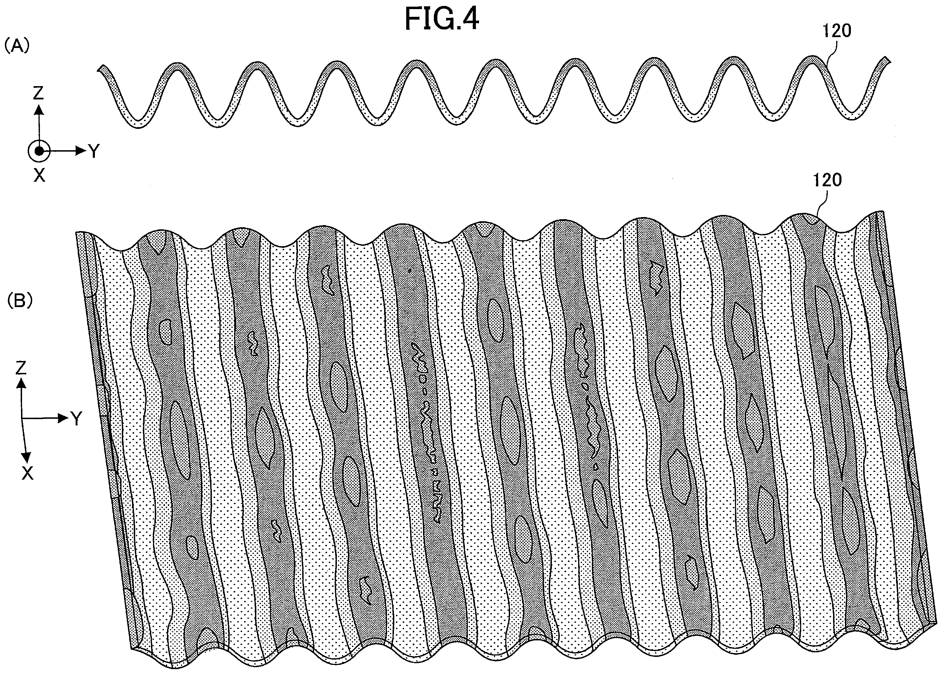

Next, a standing wave generated at the top panel 120 will be described with reference to FIG. 4.

FIG. 4 is a diagram illustrating crests formed parallel with the short side of the top panel 120 included in the standing wave generated at the top panel 120 by the natural vibration in the ultrasound frequency band. (A) of FIG. 4 is a side view, and (B) of FIG. 4 is a perspective view. (A) and (B) of FIG. 4 illustrate a waveform of an ideal standing wave obtained through a simulation.

In (A) and (B) of FIG. 4, a XYZ coordinate system similar to that of FIGS. 2 and 3 is defined. It should be noted that in (A) and (B) of FIG. 4, the amplitude of the standing wave is overdrawn in an easy-to-understand manner. Also, the vibrating element 140 is omitted in (A) and (B) of FIG. 4.

The natural vibration frequency (the resonance frequency) f of the top panel 120 is represented by the following formulas (1) and (2) where E is the Young's modulus of the top panel 120, $\rho$ is the density of the top panel 120, $\delta$ is the Poisson's ratio of the top panel 120, 1 is the long side dimension of the top panel 120, t is the thickness of the top panel 120, and k is a number of periods of the standing wave along the direction of the long side of the top panel 120. Because the standing wave has the same waveform in every half cycle, the number k of periods takes values at intervals of 0.5, therefore at 0.5, 1, 1.5, 2 ⋯.

$$f = \frac{\pi k^2 t}{l^2} \sqrt{\frac{E}{3\rho(1-\delta^2)}} \qquad (1)$$

$$f = \alpha k^2 \qquad (2)$$

It should be noted that the coefficient $\alpha$ included in formula (2) corresponds to coefficients other than $k^2$ included in formula (1).

A waveform of the standing wave illustrated in (A) and (B) of FIG. 4 is a waveform of a case where the number k of periods is 10, for example. In a case where a sheet of Gorilla (registered trademark) glass of which the length 1 of the long side is 140 mm, the length of the short side is 80 mm, and the thickness t is 0.7 mm is used as the top panel 120, for example, the natural vibration frequency f is 33.5 kHz when the number k of periods is 10. In this case, a driving signal whose frequency is 33.5 kHz may be used.

The top panel 120 is a planar member. When the vibrating element 140 (see FIGS. 2 and 3) is driven to generate the natural vibration in the ultrasound frequency band at the top panel 120, the top panel 120 deflects as illustrated in (A) and (B) of FIG. 4. As a result, the standing wave is generated in the surface of the top panel 120.

Depending on a relationship between a position where the top panel 120 is fixed to the housing 110 and a vibration point where the vibrating element 140 applies a vibration to the top panel 120, a standing wave generated at the top panel 120 of the electronic device 100 in practice may be somewhat different from an ideal waveform of the standing wave illustrated in (A) and (B) of FIG. 4 in distribution.

Further, due to an effect of reflection or attenuation of vibration generated at the top panel 120, a standing wave generated at the top panel 120 of the electronic device 100 in practice may be different from a waveform of an ideal standing wave in distribution.

In such a case, if vibration characteristics can be improved or corrected such that a distribution of a standing wave generated at the top panel 120 of the electronic device 100 in practice approaches a distribution of a waveform of an ideal standing wave, a more favorable tactile sensation can be provided to the user.

Further, in a case where a waveform of an ideal standing wave can be generated at the top panel 120 of the electronic device 100 in practice, if vibration characteristics can be improved or corrected so as to obtain a larger amplitude with reduced electric power consumption, a more favorable tactile sensation can be provided to the user.

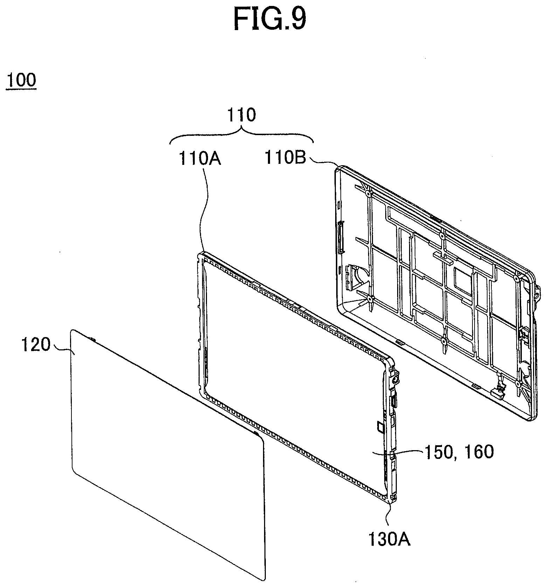

According to an aspect of the first embodiment, the structure of the electronic device 100 is shaped in order to obtain more favorable vibration characteristics. Specific details will be described later below with reference to FIGS. as of FIG. 9.

In the described embodiment, the single vibrating element 140 is bonded, on the negative side surface of the top panel 120 in the Z axis direction, at the location along the short side, which extends in the X axis direction, at the positive side in the Y axis direction. However, the electronic device 100 may use two vibrating elements 140. In a case where the electronic device 100 uses the two vibrating elements 140, another vibrating element 140 may be bonded, on the megative side surface of the top panel 120 in the Z axis direction, at a location along the short side, which extends in the X axis direction, at a negative side in the Y axis direction. In this case, the two vibrating elements 140 may be axisymmetrically disposed with respect to a center line of the top panel 120 parallel to the two short sides of the top panel 120.

Further, in a case where the electronic device 100 drives two vibrating elements 140, the two vibrating elements 140 may be driven in the same phase, if the number k of periods is an integer number. If the number k of periods is a decimal number (which is a number having an integer part and a decimal part), the two vibrating elements 140 may be driven in opposite phases.

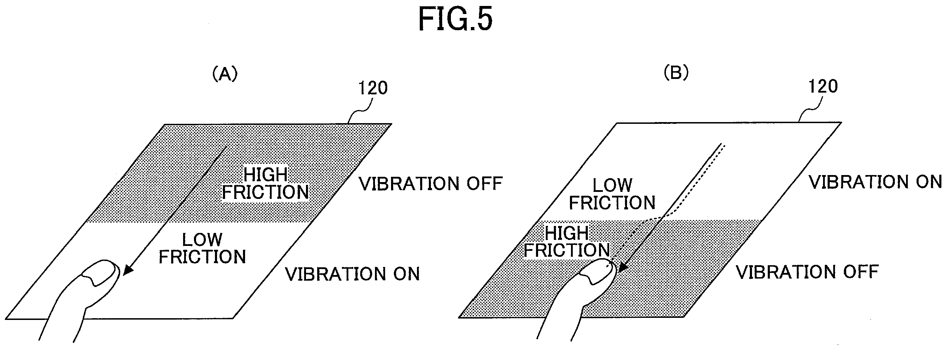

Next, the natural vibration in the ultrasound frequency band generated at the top panel 120 of the electronic device 100 will be described with reference to FIG. 5.

FIG. 5 is a diagram illustrating cases where a kinetic friction force applied to a user's fingertip performing a manipulation input is varied by the natural vibration in the ultrasound frequency band generated at the top panel 120 of the electronic device 100. In (A) and (B) of FIG. 5, while touching the top panel 120 with the user's fingertip, the user performs the manipulation input by moving his or her fingertip along the arrow from a far side to a near side of the top panel 120. It should be noted that the vibration is turned on/off by turning on/off the vibrating element 140 (see FIGS. 2 and 3).

In (A) and (B) of FIG. 5, areas which the user's fingertip touches while the vibration is off are indicated in grey, with respect to the depth direction of the top panel 120. Areas which the user's finger touches while the vibration is on are indicated in white, with respect to the depth direction of the top panel 120.

As illustrated in FIG. 4, the natural vibration in the ultrasound frequency band occurs in the entire top panel 120. (A) and (B) of FIG. 5 illustrate operation patterns in which on/off of the vibration is switched while the user's finger is tracing the top panel 120 from the far side to the near side.

Accordingly, in (A) and (B) of FIG. 5, the areas which the user's finger touches while the vibration is off are indicated in grey, and the areas which the user's finger touches while the vibration is on are indicated in white.

In the operation pattern illustrated in (A) of FIG. 5, the vibration is off when the user's finger is located on the far side of the top panel 120, and the vibration is turned on in the process of moving the user's finger toward the near side.

Conversely, in the operation pattern illustrated in (B) of FIG. 5, the vibration is on when the user's finger is located on the far side of the top panel 120, and the vibration is turned off in the process of moving the user's finger toward the near side.

Here, when the natural vibration in the ultrasound frequency band is generated at the top panel 120, a layer of air is interposed between the surface of the top panel 120 and the user's finger. The layer of air is provided by a squeeze effect. Thus, a kinetic friction coefficient on the surface of the top panel 120 is decreased when the user traces the surface with the user's finger.

Accordingly, in the grey area located on the far side of the top panel 120 illustrated in (A) of FIG. 5, the kinetic friction force applied to the user's fingertip increases. In the white area located on the near side of the top panel 120, the kinetic friction force applied to the user's fingertip decreases.

Therefore, a user who is performing the manipulation input on the top panel 120 as illustrated in (A) of FIG. 5 senses a decrease of the kinetic friction force applied to the user's fingertip when the vibration is turned on. As a result, the user senses a slippery or smooth touch (texture) with the user's fingertip. In this case, the user senses as if a concave portion were present on the surface of the top panel 120, when the surface of the top panel 120 becomes smoother and the kinetic friction force decreases.

Conversely, in the white area located on the far side of the top panel 120 illustrated in (B) of FIG. 5, the kinetic friction force applied to the user's fingertip decreases. In the grey area located on the near side of the top panel 120, the kinetic friction force applied to the user's fingertip increases.

Therefore, a user who is performing the manipulation input on the top panel 120 as illustrated in (B) of FIG. 5 senses an increase of the kinetic friction force applied to the user's fingertip when the vibration is turned off. As a result, the user senses a grippy or scratchy touch (texture) with the user's fingertip. In this case, the user senses as if a convex portion were present on the surface of the top panel 120, when the user's fingertip becomes grippy and the kinetic friction force increases.

As described above, the user can feel a concavity and convexity with his or her fingertip in the cases as illustrated in (A) and (B) of FIG. 5. For example, "The Printed-matter Typecasting Method for Haptic Feel Design and Sticky-band Illusion" (the Collection of papers of the 11th SICE system integration division annual conference (SI2010, Sendai)_174-177, 2010-12) discloses that a person can sense a concavity or a convexity. "Fishbone Tactile Illusion" (Collection of papers of the 10th Congress of the Virtual Reality Society of Japan (September, 2005)) also discloses that a person can sense a concavity or a convexity.

Although a variation of the kinetic friction force when the vibration is switched on/off is described above, a variation of the kinetic friction force is similarly obtained when the amplitude (intensity) of the vibrating element 140 is varied.

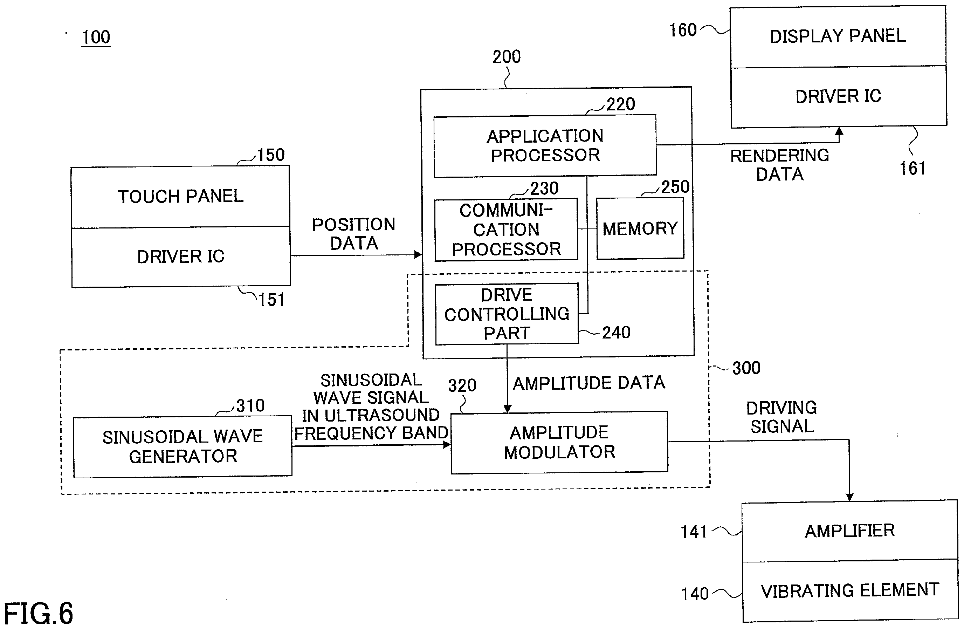

Next, a configuration of the electronic device 100 of the first embodiment will be described with reference to FIG. 6.

FIG. 6 is a diagram illustrating the configuration of the electronic device 100 of the first embodiment.

The electronic device 100 includes the vibrating element 140, an amplifier 141, the touch panel 150, a driver Integrated Circuit (IC) 151, the display panel 160, a driver IC 161, a controlling part 200, a sinusoidal wave generator 310, and an amplitude modulator 320.

The controlling part 200 includes an application processor 220, a communication processor 230 a drive controlling part 240, and a memory 250. The controlling part 200 is realized by an IC chip, for example.

The drive controlling part 240, the sinusoidal wave generator 310, and the amplitude modulator 320 constitute a drive controlling apparatus 300. Note that although the application processor 220, the communication processor 230, the drive controlling part 240, and the memory 250 are realized by one controlling part 200 in the embodiment described here, the drive controlling part 240 may be disposed outside the controlling part 200 as another IC chip or processor. In this case, data that is necessary for drive control of the drive controlling part 240 among data stored in the memory 250, may be stored in a memory other than the memory 250 and may be provided inside the drive controlling apparatus 300.

In FIG. 6, the housing 110, the top panel 120, the double-faced adhesive tape 130, and the substrate 170 (see FIG. 2) are omitted. Here, the double-faced adhesive tape 130 the amplifier 141, the driver IC 151, the driver IC 161, the drive controlling part 240, the memory 250, the sinusoidal wave generator 310, and the amplitude modulator 320 will be described.

The amplifier 141 is disposed between the drive controlling apparatus 300 and the vibrating element 140. The amplifier 141 amplifies the driving signal output from the drive controlling apparatus 300 to drive the vibrating element 140.

The driver IC 151 is coupled to the touch panel 150. The driver IC 151 detects position data that represents a position on the touch panel 150 at which a manipulation input is performed, and outputs the position data to the controlling part 200. As a result, the position data is input to the application processor 220 and the drive controlling part 240. Note that inputting the position data to the drive controlling part 240 is equivalent to inputting the position data to the drive controlling apparatus 300.

The driver IC 161 is coupled to the display panel 160. The driver IC 161 inputs rendering data, output from the drive controlling apparatus 300, to the display panel 160 and causes the display panel 160 to display an image that is based on the rendering data. In this way, a GUI manipulation part, an image, or the like based on the rendering data is displayed on the display panel 160.

The application processor 220 performs processes for executing various applications of the electronic device 100.

The communication processor 230 executes necessary processes such that the electronic device 100 performs communications such as 3G (Generation), 4G (Generation), LTE (Long Term Evolution), and WiFi.

The drive controlling part 240 outputs amplitude data to the amplitude modulator 320 in a case where two predetermined conditions are satisfied. The amplitude data is data that represents amplitude value(s) for adjusting an intensity of a driving signal used to drive the vibrating element 140. The amplitude value(s) is set in accordance with a degree of time change of the position data. Here, a speed of the user's fingertip moving along the surface of the top panel 120 is used as the degree pf time change of the position data. The drive controlling part 240 may calculate the moving speed of the user's fingertip based on a degree of time change of the position data input from the driver IC 151.

For example, in order to make a tactile sensation, to be sensed by the user from the user's fingertip, constant regardless of the moving speed of the user's fingertip, the drive controlling apparatus 300 of the first embodiment decreases the amplitude value as the moving speed increases, and increases the amplitude value as the moving speed decreases.

First data that represents a relationship between the amplitude data, representing such amplitude value(s), and the moving speed is stored in the memory 250.

It should be noted that although the amplitude value in accordance with the moving speed is set by using the first data, the amplitude value A may be calculated using the following formula (3). The amplitude value A calculated by the formula (3) decreases as the moving speed increases, and increases as the moving speed decreases.

$$A = A_0 / \sqrt{|V|/a} \qquad (3)$$

Here, "$A_0$" is a reference value of the amplitude, "$V$" represents the moving speed of the fingertip and "$a$" is a predetermined constant value. In a case where the amplitude value A is calculated by using the formula (3), data representing the formula (3) and data representing the reference value $A_0$ and the predetermined constant value $a$ may be stored in the memory 250.

The drive controlling apparatus 300 of the first embodiment causes the top panel 120 to vibrate in order to vary the kinetic friction force applied to the user's fingertip when the user's fingertip moves along the surface of the top panel 120. Because the kinetic friction force occurs when the user's fingertip is in motion, the drive controlling part 240 causes the vibrating element 140 to vibrate when the moving speed becomes greater than or equal to a predetermined threshold speed. The first predetermined condition is that the moving speed is greater than or equal to the predetermined threshold speed.

Accordingly, the amplitude value represented by the amplitude data output from the drive controlling part 240 is zero in a case where the moving speed is less than the predetermined threshold speed. The amplitude value is set to be a predetermined amplitude value corresponding to the moving speed in a case where the moving speed becomes greater than or equal to the predetermined threshold speed. When the moving speed is greater than or equal to the predetermined threshold speed, the amplitude value is set to be smaller as the moving speed increases, and the amplitude value is set to be larger as the moving speed decreases.

The drive controlling apparatus 300 of the first embodiment outputs the amplitude data to the amplitude modulator 320 in a case where the position of the user's fingertip performing the manipulation input is within a predetermined area in which a vibration is to be generated. The second predetermined condition is that the position of the user's fingertip performing the manipulation input is within the predetermined area in which the vibration is to be generated.

It is determined whether the position of the user's fingertip performing the manipulation input is within the predetermined area, in which a vibration is to be generated, based on whether the position of the user's fingertip performing the manipulation input is located inside the predetermined area in which the vibration is to be generated.

Here, a position of a GUI manipulation part to be displayed on the display panel 160, of a area for displaying an image, of a area representing an entire page, or the like on the display panel 160 is specified by area data that represents the area. The area data is provided, in all applications, with respect to all GUI manipulation parts to be displayed on the display panel 160, the area for displaying an image, or the area representing the entire page.

Accordingly, when the drive controlling apparatus 300 determines, as the second predetermined condition, whether the position of the user's fingertip performing the manipulation input is within the predetermined area in which a vibration is to be generated, a type of the application(s) activated by the electronic device 100 is of concern to the determination. This is because contents displayed on the display panel 160 differ depending on the types of the applications.

Further, this is because types of the manipulation inputs of moving the user's fingertip(s) touching the surface of the top panel 120 differ depending on the types of the applications. For example, there is a flick operation as a type of a manipulation input performed by moving the user's fingertip(s) touching the surface of the top panel 120 when manipulating a GUI manipulation part. The flick operation is an operation performed by moving the user's fingertip for a relatively short distance to flick (snap) the surface of the top panel 120.

In a case where the user turns over a page, a swipe operation is performed, for example. The swipe operation is an operation performed by moving the user's fingertip for a relatively long distance to swipe the surface of the top panel 120. The swipe operation is performed when the user flips a page or a photo, for example. Further, in a case of sliding the slider of the GUI manipulation part (see the slider 102B in FIG. 1), a drag operation is performed to drag the slider.

The manipulation inputs that are performed by moving the user's fingertip(s) touching the surface of the top panel 120, such as the flick operation, the swipe operation and the drag operation that are introduced as examples, are

EP 3 279 775 A1

used differently depending on types of displayed contents by the applications. Accordingly, the type of the application executed by the electronic device 100 is related to determining whether the position of the user's fingertip performing the manipulation input is within the predetermined area in which a vibration is to be generated.

The drive controlling part 240 uses the area data to determine whether the position represented by the position data input from the driver IC 151 is within the predetermined area in which a vibration is to be generated.

The memory 250 stores the second data that associates data, which represents the types of the applications, with the area data, which represents the areas of the GUI input parts or the like in which a manipulation input is to be performed, and with pattern data, which represents vibration patterns.

The drive controlling part 240 performs the following processes in order to interpolate a positional change of the position of the user's fingertip during the required duration of time from a point of time when the position data is input to the drive controlling apparatus 300 from the driver IC 151 to a point of time when the driving signal is calculated based on the position data.

The drive controlling apparatus 300 performs calculation for each predetermined control cycle. Similarly, the drive controlling part 240 also performs calculation for each predetermined control cycle. Hence, when the required duration of time, from the point of time when position data is input from the driver IC 151 to the drive controlling apparatus 300 to the point of time when the driving signal is calculated by the drive controlling part 240 based on the position data, is $\Delta t$, the required duration $\Delta t$ of time is equal to the control cycle.

Here, the moving speed of the user's fingertip can be calculated as a velocity of a vector that has a starting point (x1, y1) represented by the position data input to the drive controlling apparatus 300 from the driver IC 151 and a terminal point (x2, y2) corresponding to the position of the user's fingertip after an elapse of the required duration $\Delta t$ of time.

The drive controlling part 240 estimates coordinates (x3, y3) after the elapse of the required duration $\Delta t$ of time by calculating a vector having a starting point (x2, y2) represented by the position data input to the drive controlling apparatus 300 from the driver IC 151 and a terminal point (x3, y3) corresponding to the position of the user's fingertip after the elapse of the required duration $\Delta t$ of time.

The electronic device 100 of the first embodiment interpolates the positional change of the position of the user's fingertip having arisen in the required duration $\Delta t$ of time by estimating coordinates after the elapse of the required duration $\Delta t$ of time as described above.

The drive controlling part 240 performs such calculation of estimating the coordinates after the elapse of the required duration $\Delta t$ of time. The drive controlling part 240 determines whether the estimated coordinates are located inside the predetermined area in which a vibration is to be generated and generates the vibration when the estimated coordinates are located inside the predetermined area. Accordingly, the second predetermined condition is that the estimated coordinates are located inside the predetermined area in which a vibration is to be generated.

As described above, the two predetermined conditions required for the drive controlling part 240 to output the amplitude data to the amplitude modulator 320 are that the moving speed of the user's fingertip is greater than or equal to the predetermined threshold speed and that the estimated coordinates are located in the predetermined area in which a vibration is to be generated.

In a case where the moving speed of the user's fingertip is greater than or equal to the predetermined threshold speed and the estimated coordinates are located inside the predetermined area in which the vibration is to be generated, the drive controlling part 240 reads amplitude data that represents an amplitude value corresponding to the moving speed from the memory to output the amplitude data to the amplitude modulator 320.

The memory 250 stores the first data that represents a relationship between the amplitude data representing amplitude values and the moving speeds, and stores the second data that associates data, which represents the types of the applications, with the area data, which represents the areas of the GUI input parts or the like in which a manipulation input is to be performed, and with the pattern data, which represents vibration patterns.

Further, the memory 250 stores programs and data necessary for the application processor 220 to execute the applications, and stores programs and data necessary for communicating processing of the communication processor 230, and the like.

The sinusoidal wave generator 310 generates sinusoidal waves required for generating the driving signal that is for vibrating the top panel 120 at the natural vibration frequency. For example, in a case of causing the top panel 120 to vibrate at the natural vibration frequency f of 33.5 kHz, a frequency of the sinusoidal waves becomes 33.5 kHz. The sinusoidal wave generator 310 inputs a sinusoidal wave signal in the ultrasound frequency band to the amplitude modulator 320.

Using the amplitude data input from the drive controlling part 240, the amplitude modulator 320 modulates an amplitude of the sinusoidal wave signal, input from the sinusoidal wave generator 310, to generate a driving signal. The amplitude modulator 320 modulates only the amplitude of the sinusoidal wave signal in the ultrasound frequency band, input from the sinusoidal wave generator 310, to generate the driving signal without modulating a frequency and a phase of the sinusoidal wave signal.

Hence, the driving signal output from the amplitude modulator 320 is a sinusoidal wave signal in the ultrasound frequency band obtained by modulating only the amplitude of the sinusoidal wave signal in the ultrasound frequency band input from the sinusoidal wave generator 310. It should be noted that in a case where the amplitude data is zero, the amplitude of the driving signal is zero. This is the same as the amplitude modulator 320 not outputting the driving signal.

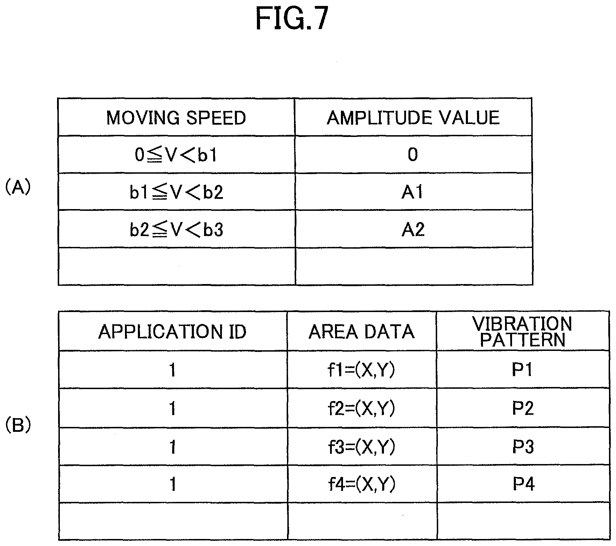

Next, the first data and the second data stored in the memory 250 will be described with reference to FIG. 7.

FIG. 7 is a diagram illustrating the first data and the second data stored in the memory 250.

As illustrated in (A) of FIG. 7, the first data is data that associates amplitude data representing amplitude values with moving speeds. According to the first data illustrated in (A) of FIG. 7, the amplitude value is set to be zero when the moving speed is greater than or equal to 0 and less than b1 ($0 \leq V < b1$), the amplitude value is set to be A1 when the moving speed is greater than or equal to b1 and less than b2 ($b1 \leq V < b2$), and the amplitude value is set to be A2 when the moving speed is greater than or equal to b2 and less than b3 ($b2 \leq V < b3$).

Further, as illustrated in (B) of FIG. 7, the second data is data that associates data representing types of applications with area data representing coordinate values of areas where a GUI manipulation part or the like on which a manipulation input is performed is displayed, and with pattern data representing vibration patterns.

(B) of FIG. 7 illustrates an application Identification (ID) as the data representing the type of the application. Further, (B) of FIG. 7 illustrates, as the area data, formulas f1 to f4 representing coordinate values of areas where a GUI manipulation part or the like on which a manipulation input is performed is displayed. Further, (B) of FIG. 7 illustrates P1 to P4 as the pattern data representing the vibration patterns.

Note that the applications, represented by the application IDs included in the second data, include all applications usable in a smartphone terminal device or a tablet computer and include a mode for editing an e-mail.

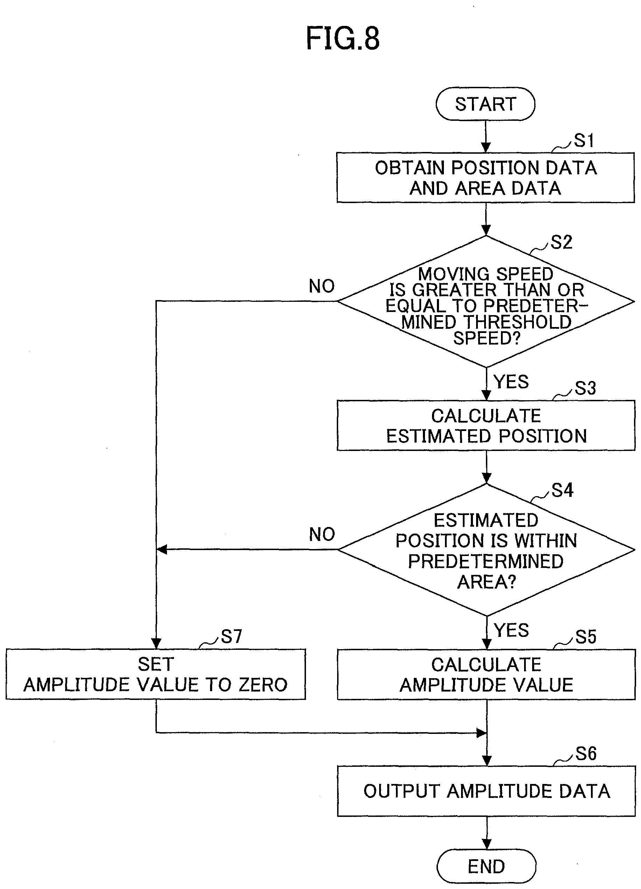

Next, a process that is executed by the drive controlling part 240 of the drive controlling apparatus 300 of the electronic device 100 according to the first embodiment will be described with reference to FIG. 8.

FIG. 8 is a flowchart illustrating the process that is executed by the drive controlling part 240 of the drive controlling apparatus 300 of the electronic device 100 according to the first embodiment.

An operating system (OS) of the electronic device 100 executes control for driving the electronic device 100 every predetermined control cycle. Accordingly, the drive controlling apparatus 300 performs calculation for every predetermined control cycle. The same is applied to the drive controlling part 240, and the drive controlling part 240 repeatedly executes the flow illustrated in FIG. 8 for every predetermined control cycle.

Here, when a required period of time, from a point of time when position data is input from the driver IC 151 to the drive controlling apparatus 300 to a point of time when a driving signal is calculated by the drive controlling part 240 based on the position data, is Δt, the required period Δt of time is substantially equal to the control cycle.

A period of time of one cycle of the control cycle can be treated as a period of time corresponding to the required period Δt of time, which is required from the point of time at which the position data is input to the drive controlling apparatus 300 from the driver IC 151 to the point of time at which the driving signal is calculated based on the input position data.

The drive controlling part 240 starts the process when the electronic device 100 is powered on.

With respect to a GUI manipulation part on which a manipulation input is currently being performed, the drive controlling part 240 obtains area data in step S1 in accordance with coordinates represented by the current position data and with a type of a current application. The area data is associated with a vibration pattern.

The drive controlling part 240 determines whether the moving speed is greater than or equal to the predetermined threshold speed in step S2. The moving speed may be calculated by a vector operation. The threshold speed may be set to be the minimum speed of the moving speed of the user's fingertip performing the manipulation input while moving the user's fingertip such as a flick operation, a swipe operation, a drag operation or the like. Such a minimum speed may be set based on an experimental result, a resolution of the touch panel 150 or the like.

In a case where the drive controlling part 240 has determined that the moving speed is greater than or equal to the predetermined threshold (YES in step S2), the drive controlling part 240 calculates in step S3 estimated coordinates of after the elapse of the duration Δt of time based on the coordinates represented by the current position data and based on the moving speed.

The drive controlling part 240 determines in step S4 whether the estimated coordinates after the elapse of the duration Δt of time are located within an area St which is represented by the area data obtained in step S1.

In a case where the drive controlling part 240 determines that the estimated coordinates after the elapse of the duration Δt of time are within the area St represented by the region data obtained in step S1, the drive controlling part 240 obtains in step S5, from the first data, amplitude data representing an amplitude value corresponding to the moving speed obtained in step S2.

The drive controlling part 240 outputs the amplitude data in step S6. As a result, the amplitude modulator 320 generates a driving signal by modulating the amplitude of the sinusoidal wave output from the sinusoidal wave generator 310, and the vibrating element 140 is driven by the driving signal.

On the other hand, in a case where drive controlling part 240 has determined that the moving speed is not greater than or not equal to the predetermined threshold speed (NO in step S2) or in a case where the drive controlling part 240 has determined that the estimated coordinates after the elapse of the duration Δt of time are not within the area St (NO in step S4), the drive controlling part 240 sets the amplitude value to be zero in step S7).

As a result, the drive controlling part 240 outputs amplitude data of which the amplitude value is zero, and the amplitude modulator 320 generates a driving signal by modulating the amplitude of the sinusoidal wave output from the sinusoidal wave generator 310 to be zero. Accordingly, in this case, the vibrating element 140 is not driven.

In the following, details of an attachment structure of the electronic device 100 according to the first embodiment will be described with reference to FIG. 9 to FIG. 17.

FIG. 9 is an exploded perspective view illustrating the electronic device 100 according to the first embodiment. FIG. 9 illustrates a more specific configuration of the electronic device 100 illustrated in FIG. 1 to FIG. 3.

In FIG. 9, the housing 110 is divided into housings 110A and 110B, and the top panel 120 is detached. The touch panel 150 and the display panel 160 are attached to the housing 110A. The amplifier 141, the touch panel 150, the driver IC 151, the display panel 160, the driver IC 161, the controlling part 200, the sinusoidal wave generator 310, the amplitude modulator 320, and the like (see FIG. 6), which are not illustrated in FIG. 9, are also mounted on the housing 110A.

In a state in which the above described elements are mounted on the housing 110A, the top panel 120 is attached to the housing 110A at the front surface side of the touch panel 150 by a double-faced adhesive tape 130A, and the housing 110A is housed inside the housing 110B. The housing 110B is a portion exposed at the side surfaces and the back surface (the surface opposite to the top panel 120) of the electronic device 100.

Note that the housing 110A, the top panel 120, and the touch panel 150 constitute a coordinate detecting unit.

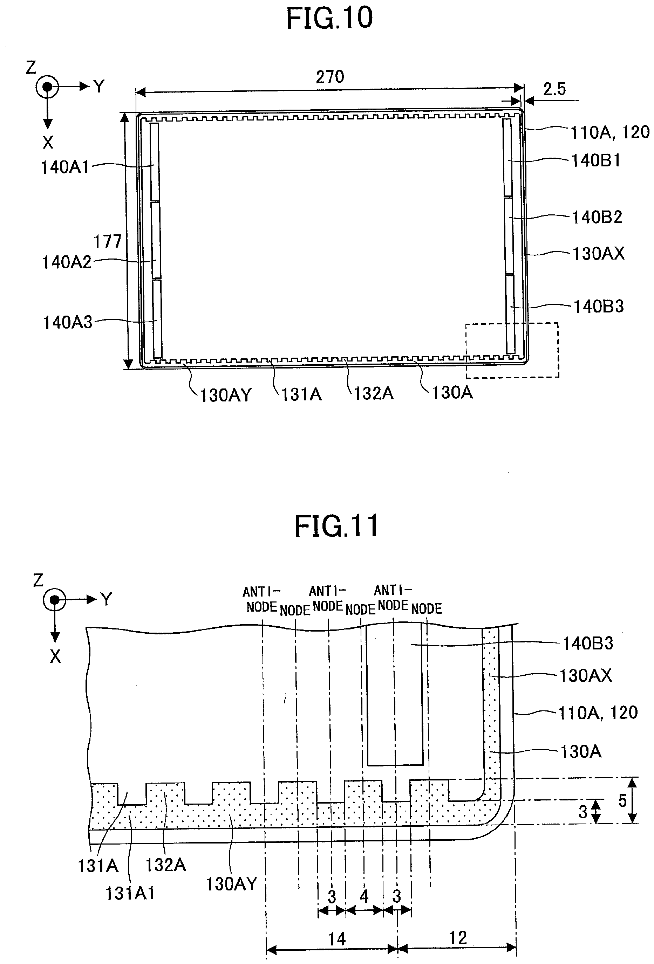

FIG. 10 is a diagram illustrating a planar positional relationship between the housing 110A, the top panel 120, the double-faced adhesive tape 130A, and vibrating elements 140A1, 140A2, 140A3, 140B1, 140B2, and 140B3.

FIG. 11 is an enlarged view of a portion enclosed by a broken line of FIG. 10. In FIG. 10 and FIG. 11, an XYZ coordinate system that is the same as that in FIG. 1 to FIG. 3 is used.

Note that, in the following, the vibrating elements 140A1, 140A2, and 140A3 are referred to as the vibrating elements 140A1 to 140A3. Similarly, the vibrating elements 140B1, 140B2, and 140B3 are referred to as the vibrating elements 140B1 to 140B3. Further, the vibrating elements 140A1, 140A2, 140A3, 140B1, 140B2, and 140B3 are referred to as the vibrating elements 140A1 to 140B3.

The double-faced adhesive tape 130A is arranged similar to the double-faced adhesive tape 130 illustrated in FIG. 2 and FIG. 3. The double-faced adhesive tape 130A is illustrated as a specific configuration of the double-faced adhesive tape 130 illustrated in FIG. 2 and FIG. 3.

Similar to the vibrating element 140 illustrated in FIG. 2 and illustrated in FIG. 3, the vibrating elements 140B1 to 140B3 are arranged on the back surface (the negative side surface in the Z axis direction) of the top panel 120. The three vibrating elements 140B1 to 140B3 are arrayed at equal intervals in the X axis direction.

Further, in FIG. 10, in addition to the vibrating elements 140B1 to 140B3, the vibrating elements 140A1 to 140A3 are arranged, along the X axis direction, at a negative side in the Y axis direction. Similar to the vibrating elements 140B1 to 140B3, the vibrating elements 140A1 to 140A3 are attached to the back surface of the top panel 120.

Here, a dimension of each part is as follows, for example. The top panel 120 is glass of which a length in the X direction (length of short sides) is 177 mm, a length in the Y direction (length of long sides) is 270 mm, and a thickness (thickness in the Z axis direction) is 0.7 mm, and reinforced glass of Dragontrail (registered trademark) is used as the top panel 120, for example.

Each of the vibrating elements 140A1 to 140B3 is a piezoelectric element of which a length in the X direction (length of long sides) is 53 mm, a length (width) in the Y direction is 5.5 mm, and a thickness (thickness in the Z axis direction) is 0.3 mm.

The vibrating elements 140A1 to 140A3 are arrayed in the X axis direction such that the centers of the widths of the vibrating elements 140A1 to 140A3 are located, 12 mm from the negative side edge of the top panel 120 in the Y axis direction, towards the positive side in the Y axis direction. Similarly, the vibrating elements 140B1 to 140B3 are arrayed in the X axis direction such that the centers of the widths of the vibrating elements 140B1 to 140B3 are located, 12 mm from the positive side edge of the top panel 120 in the Y axis direction, towards the negative side in the Y axis direction.

Upon driving the vibrating elements 140A1 to 140B3 by using a driving signal of 35.2 kHz, a length of one wavelength of a standing wave (length in the Y axis direction) generated at the top panel 120 is 14 mm. Hence, the order of the standing wave (natural vibration) that occurs at the top panel 120 is 38. That is, 38 antinodes and 38 nodes occur at the top panel 120 in the Y axis direction.

At positions away from the negative side edge of the top panel 120 in the Y axis direction towards the positive side in the Y axis direction by 12 mm (the positions of the vibrating elements 140A1 to 140A3), antinodes of standing waves occur. Further, at positions away from the positive side edge of the top panel 120 in the Y axis direction towards the negative side in the Y axis direction by 12 mm (the positions of the vibrating elements 140B1 to 140B3), antinodes of standing waves occur.

Note that the positions of the vibrating elements 140A1 to 140A3 are outside the display area of the display panel 160 arranged at the negative side in the Z axis direction of the top panel 120.

Under such conditions, the following double-faced adhesive tape 130A is used.

The double-faced adhesive tape 130A is a double-faced adhesive tape having a rectangular-ring-shape in a plan view, arranged along the four edge sides of the top panel 120. The double-faced adhesive tape 130A has sections 130AX extending in the X direction and sections 130AY extending in the Y direction.

The width of the sections 130AX in the Y axis direction is constant with respect to the X axis direction, and is set to be less than or equal to a quarter of a pitch of one period of a standing wave in the Y axis direction. The sections 130AX are arranged to extend in the X axis direction such that their positions in the Y axis direction are in accordance with nodes of standing waves. Here, the center of the width of the section 130AX is arranged to be located at a position of 2.5 mm from the positive side edge of the top panel 120 in the Y axis direction, towards the negative side in the Y axis direction.

Along the Y axis direction, the sections 130AY are patterned to be recessed and protruding such that recessed parts 131A and protruding parts 132A are repeated in order in a plan view. The double-faced adhesive tape 130A has a base part 130A1, the recessed parts 131A, and the protruding parts 132A in the section 130AY. The protruding parts 132A are portions that protrude from the base part 130A1 in the X axis direction in a plan view, and the recessed parts 131A are provided between the adjacent protruding parts 132A. The recessed parts 131A and the protruding parts 132A are patterned to be a square wave shape in a plan view.

Note that such a double-faced adhesive tape 130A can be created by forming recessed parts 131A on a double-faced adhesive tape having a constant width in the longitudinal direction, for example.

The recessed parts 131A are arranged in accordance with positions of antinodes of standing waves, and the protruding parts 132A are arranged in accordance with positions of nodes of the standing waves. More specifically, the centers of the widths of the recessed parts 131A in the Y axis direction are arranged in accordance with the positions at which the antinodes of a standing wave occur, and the centers of the widths of the protruding parts 132A are arranged in accordance with the positions of the nodes of the standing wave.

The reason why the positions of the recessed parts 131A are made in accordance with the positions of the antinodes of the standing wave is as follows. At the sections where the recessed parts 131A are present, the width of the double-faced adhesive tape 130A in the X axis direction is narrower than that of the sections where the protruding parts 132A are present, and a force for fixing the housing 110A and the top panel 120 is weaker than that at the protruding parts 132A. In other words, stiffness of the top panel 120 with the housing 110A at the sections where the recessed parts 131A are present is lower than stiffness of the top panel 120 with the housing 110A at the sections where the protruding parts 132A are present.

Therefore, by making the positions of the recessed parts 131A in accordance with the positions of the antinodes of a standing wave, the amplitude of the standing wave is further increased and favorable amplification characteristics of the standing wave are obtained. Due to such a reason, the positions of the recessed parts 131A are made to match the positions of the antinodes of the standing wave.

Further, the reason why the positions of the protruding parts 132A are made in accordance with the positions of the nodes of the standing wave is as follows. At the sections where the protruding parts 132A are present, the width of the double-faced adhesive tape 130A in the X axis direction is wider than that of the sections where the recessed parts 131A are present, and a force for fixing the housing 110A and the top panel 120 is stronger than that at the sections where the recessed parts 131A are present. Therefore, by making the positions of the protruding parts 132A in accordance with the positions of the nodes of a standing wave, the vibration of the standing wave at the nodes is further effectively reduced and favorable attenuation characteristics of the standing wave are obtained. Due to such a reason, the positions of the protruding parts 132A are made in accordance with the positions of the nodes of the standing wave.

Note that a meaning of the positions of the nodes of a standing wave includes not only points at which the amplitude of the standing wave is zero but also includes sections where the amplitude is less than or equal to a predetermined value that is relatively small. Further, a meaning of the positions of the antinodes of a standing wave is, within a section of one period of the standing wave, sections, other than the positions of the nodes of the standing wave, or sections where the amplitude is greater than or equal to a predetermined value that is relatively large, including the positions at which the top of the antinodes of the standing wave occur.

Arranging the recessed parts 131A in accordance with the positions of the antinodes of a standing wave means arranging the recessed parts 131A so as to have sections such that the sections where the recessed parts 131A are present in the Y axis direction overlap with the sections of the positions of the above described antinodes.

Further, arranging the protruding parts 132A in accordance with the positions of the nodes of a standing wave means arranging the protruding parts 132A so as to have sections such that the sections where the protruding parts 132A are present in the Y axis direction overlap with the sections of the positions of the above described nodes.

Under driving conditions determined depending on dimensions of the top panel 120 and the vibrating elements 140A1 and 140B3 and on a frequency of a driving signal, for example, the dimensions of the recessed parts 131A and the protruding parts 132A may be set as illustrated in FIG. 11.

Because two antinodes and two nodes are included in one period of a standing wave, the recessed parts 131A and the protruding parts 132A may be respectively arranged to correspond to the antinodes and the nodes. Hence, the lengths of the recessed parts 131A and the protruding parts 132A in the Y axis direction may be set such that a length in the Y axis direction of a recessed part 131A, a protruding part 132A, the next recessed part 131A, and the next protruding part 132A that are continuous is one wavelength of a standing wave (14 mm). Here, for example, the lengths of the recessed parts 131A in the Y axis direction are set to be 3 mm, and the lengths of the protruding parts 132A in the Y axis direction are set to be 4 mm.

Further, the width of the base part 130A1 in the X axis direction is set to be 2 mm, and the lengths by which the protruding parts 132A protrude from the base part 130A1 in the X axis direction is set to be 3 mm. That is, the width of the double-faced adhesive tape 130A in the X axis direction at the sections where the recessed parts 131A are present is 3 mm, and the width of the double-faced adhesive tape 130A in the X axis direction at the sections where the protruding parts 132A are present is 5 mm.

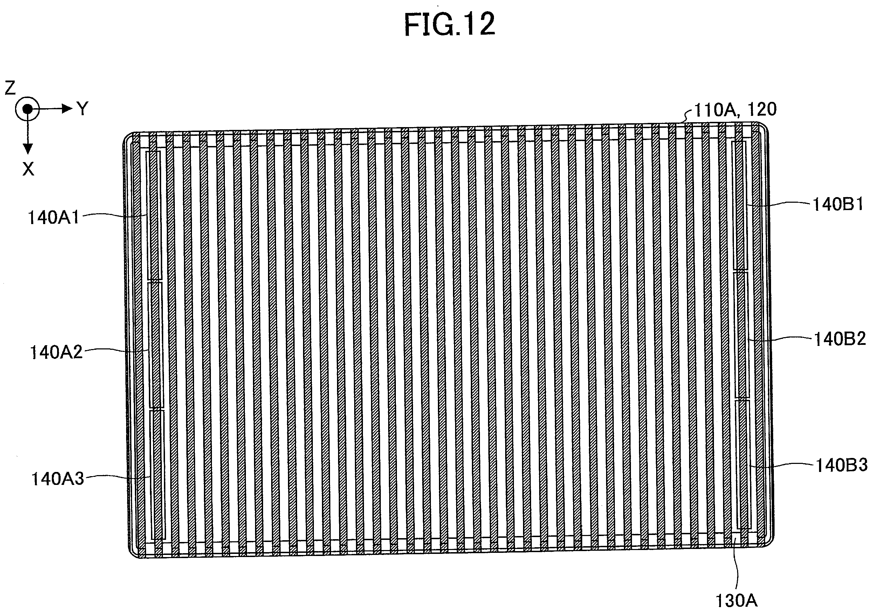

In a state in which the top panel 120 is fixed to the housing 110A by use of the above described double-faced adhesive tape 130A, upon driving the vibrating elements 140A1 to 140B3 at a frequency of 35.2 kHz, antinodes and nodes of a standing wave occur as illustrated in FIG. 12 at the electronic device 100A.

FIG. 12 is a diagram illustrating a standing wave generated at the top panel 120 of the electronic device 100A. In FIG. 12, portions where the antinodes occur are illustrated by hatching and portions where the nodes occur are illustrated by white.

As illustrated in FIG. 12, the antinodes occur at the sections where the recessed parts 131A are provided, and the nodes occur at the sections where the protruding parts 132A are provided.

Hence, by attaching the top panel 120 to the housing 110A through the double-faced adhesive tape 130A, the amplitude of the antinodes of a natural vibration (standing wave) in the ultrasound frequency band can be further increased and the amplitude of the nodes can be effectively reduced.

Therefore, according to the first embodiment, the top panel 120 is fixed to the housing 110A by the double-faced adhesive tape 130A having the recessed parts 131A, arranged at the positions corresponding to the antinodes of standing waves, and the protruding parts 132A, arranged at the positions corresponding to the nodes of the standing waves. Thereby, it is possible to provide the electronic device 100A and a coordinate detecting unit such that favorable vibration characteristics are obtained.

Due to reflection, attenuation, or the like, a standing wave generated at the top panel 120 of the electronic device 100A in practice may be different from an ideal waveform in distribution. Even in such a case, according to the first embodiment, by arranging the recessed parts 131A and the protruding parts 132A of the double-faced adhesive tape 130A at the positions of the antinodes and the nodes of a standing wave, favorable vibration characteristics are obtained.

Note that the dimensions of the respective parts illustrated in FIG. 10 and FIG. 11 are examples, and the embodiment is not limited to the above described dimensions. The dimensions of the respective parts may be set to be appropriate values in accordance with dimensions and a material of the top panel 120, a type, a size, and positions of the vibrating elements 140A1 to 140B3, a frequency of a driving signal, and the like.

In particular, the double-faced adhesive tape 130A may be arranged such that the recessed parts 131A are arranged at the positions corresponding to the antinodes of the standing wave and the protruding parts 132A are arranged at the positions corresponding to the nodes of the standing wave, and the dimensions of the respective parts of the recessed parts 131A and the protruding parts 132A may be set to be various values.

Further, because the double-faced adhesive tape 130A, having the recessed parts 131A and the protruding parts 132A, has a rectangular-ring shape in a plan view, it is possible to ensure, in a state in which the top panel 120 is attached to the housing 110A, a waterproofing property and a dust resistance with respect to internal space in the housing 110A.

Further, because the electronic device 100A according to the embodiment generates the natural vibration in the ultrasound frequency band of the top panel 120 to change the kinetic friction force applied to the user's fingertip, it is possible to provide a favorable tactile sensation to the user.

Further, the electronic device 100A of the first embodiment generates a driving signal by causing the amplitude modulator 320 to modulate only the amplitude of a sinusoidal wave in the ultrasound frequency band output from the sinusoidal wave generator 310. The frequency of the sinusoidal wave in the ultrasound frequency band generated by the sinusoidal wave generator 310 is equal to the natural vibration frequency of the top panel 120. Further, the natural vibration frequency is set in consideration of the vibrating elements 140A1 to 140B3.

That is, the driving signal is generated by the amplitude modulator 320 modulating only the amplitude of the sinusoidal wave in the ultrasound frequency band generated by the sinusoidal wave generator 310 without modulating the frequency or the phase of the sinusoidal wave.

Accordingly, it becomes possible to generate, at the top panel 120, the natural vibration in the ultrasound frequency band of the top panel 120 and to decrease with certainty the kinetic friction coefficient applied to the user's finger tracing the surface of the top panel 120 by utilizing the layer of air provided by the squeeze effect. Further, it becomes possible to provide a favorable tactile sensation to the user as if a concavo-convex portion were present on the surface of the top panel 120 by utilizing the Sticky-band Illusion effect or the Fishbone Tactile Illusion effect.

Because the electronic device 100 generates vibration in a case where the estimated coordinates, obtained by estimating the coordinates after the elapse of the required duration Δt of time corresponding to the duration of time of one cycle of the control cycle, are within the predetermined region in which the vibration is to be generated, it becomes possible to generate the vibration while the user's fingertip is touching a predetermined GUI input part or the like.

Note that in a case where a delay corresponding to the required duration Δt of time corresponding to the duration of time of one cycle of the control is not significant, the electronic device 100 is not required to perform the calculation of the estimated coordinates.

In the embodiment described above, in order to provide the tactile sensations to the user as if concave-convex portions were present on the top panel 120, the vibrating elements 140A1 to 140B3 are switched on/off. Turning off the vibrating elements 140A1 to 140B3 is equal to setting the amplitude value, represented by the driving signal used to drive the vibrating elements 140A1 to 140B3, to be zero.

However, it is not necessary to turn the vibrating elements 140A1 to 140B3 from on to off in order to provide such tactile sensations. For example, the vibrating elements 140A1 to 140B3 may be driven to decrease the amplitude instead of turning off the vibrating elements 140A1 to 140B3. For example, similar to turning the vibrating elements 140A1 to 140B3 from on to off, the electronic device 100 may provide a tactile sensation to the user as if a concavo-convex portion were present on the top panel 120 by decreasing the amplitude to about one-fifth.

In this case, the vibrating elements 140A1 to 140B3 are driven by a driving signal such that the intensity of the vibration of the vibrating elements 140A1 to 140B3 is changed. As a result, the intensity of the natural vibration generated at the top panel 120 is changed. It becomes possible to provide the tactile sensation to the user's fingertip as if a concavo-convex portion were present on the top panel 120.

If the vibrating elements 140A1 to 140B3 are turned off when weakening vibrations in order to switch the intensities of the vibrations of the vibrating elements 140A1 to 140B3, on/off of the vibrating elements 140A1 to 140B3 are switched. Switching on/off of the vibrating elements 140A1 to 140B3 means driving the vibrating elements 140A1 to 140B3 intermittently.

As described above, according to the embodiment, it is possible to provide the electronic device 100A and a coordinate detecting unit having favorable vibration characteristics and being able to provide favorable tactile sensations.

Although the six vibrating elements 140A1 to 140B3 are arranged on the top panel 120 in the described embodiment illustrated in FIG. 9 to FIG. 12, the number and positions of vibrating elements may be changed as long as a natural vibration in the ultrasound frequency band can be generated at the top panel 120.

Note that although the vibrating elements 140A1 to 140B3 are driven by a driving signal in the ultrasound frequency band in the embodiment described above, the vibrating elements 140A1 to 140B3 may be driven by a driving signal in a frequency band of an audible range. Here, for example, the frequency band of the audible range is a frequency band less than approximately 20 kHz and is a frequency band that can be heard by persons.

Further, although the sections on which the recessed parts 131A of the double-faced adhesive tape 130A are formed are coupled through the base part 130A1 to the sections where the protruding parts 132A are present in the embodiment described above, in the double-faced adhesive tape 130A, sections where the recessed parts 131A are present may be disconnected and sections where the protruding parts 132A are present may be separated to be in an islands-shape. That is, the double-faced adhesive tape 130A is not required to include a base part 130A1.

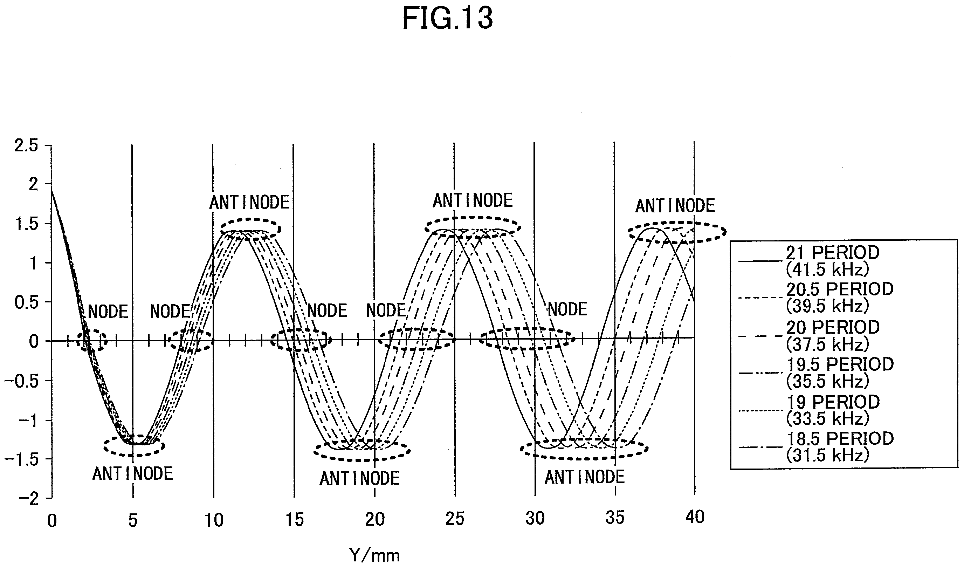

FIG. 13 is a diagram illustrating a relationship between frequencies of driving signals and waveforms of standing waves. The horizontal axis of FIG. 13 represents a position in the Y axis direction from the negative side edge of the top panel 120 in the Y axis direction, and the vertical axis represents an amplitude of standing waves.

FIG. 13 is a simulation result illustrating five types of vibration modes for which numbers of periods of standing waves and frequencies of driving signals are 21 periods (41.5 kHz), 20.5 periods (39.5 kHz), 20 periods (37.5 kHz), 19.5 periods (35.5 kHz), 19 periods (33.5 kHz), and 18.5 periods (31.5 kHz).

These vibration modes occur in a case of using a top panel 120 at which resonance occurs in a frequency band of from 30 kHz to 45 kHz, and FIG. 13 illustrates waveforms of standing waves at given moments.

As illustrated in FIG. 13, it is found that even when the same top panel 120 is used, a plurality of vibration modes are generated by changing frequencies of driving signals. In the respective vibration modes, antinodes and nodes differ. That is, depending on coupled conditions including vibration conditions such as positions and frequencies of the vibrating elements 140A1 to 140B3 that vibrate the top panel 120 and including fixing conditions such as a position or strength for fixing the top panel 120 to the housing 110A, vibration modes of standing waves generated at the top panel 120 change.

Accordingly, the numbers and the lengths in the Y axis direction of the recessed parts 131A and the protruding parts 132A of the double-faced adhesive tape 130A may be set such that the recessed parts 131A and the protruding parts 132A are respectively arranged, in accordance with the number of periods of a standing wave and a frequency of a driving signal, at positions corresponding to the antinodes and the nodes of the standing wave.

Further, depending on coupled conditions, a plurality of vibration modes may simultaneously appear to generate a complex vibration mode. In such a case, vibration modes, which are not desirable and not necessary, may be included.

Hence, by setting the numbers, the lengths in the Y axis direction, and the like of the recessed parts 131A and the protruding parts 132A of the double-faced adhesive tape 130A as appropriate, vibration modes may be adjusted such that waveforms of unnecessary vibration modes are attenuated and standing waves according to a desired vibration mode are stably and efficiently generated.

A state in which standing waves according to a desired vibration mode are stably and efficiently generated is a state as illustrated in (A) and (B) of FIG. 4 in which the antinodes and the nodes of the standing wave stably occur over the X axis direction, a sufficient amplitude of the antinodes is obtained, and the antinodes and the nodes are uniformly distributed in the Y axis direction from corner to corner.

By appropriately setting lengths in the Y axis direction, the numbers of the recessed parts 131A and the protruding parts 132A, and the like of the double-faced adhesive tape 130A, favorable vibration characteristics can be obtained.

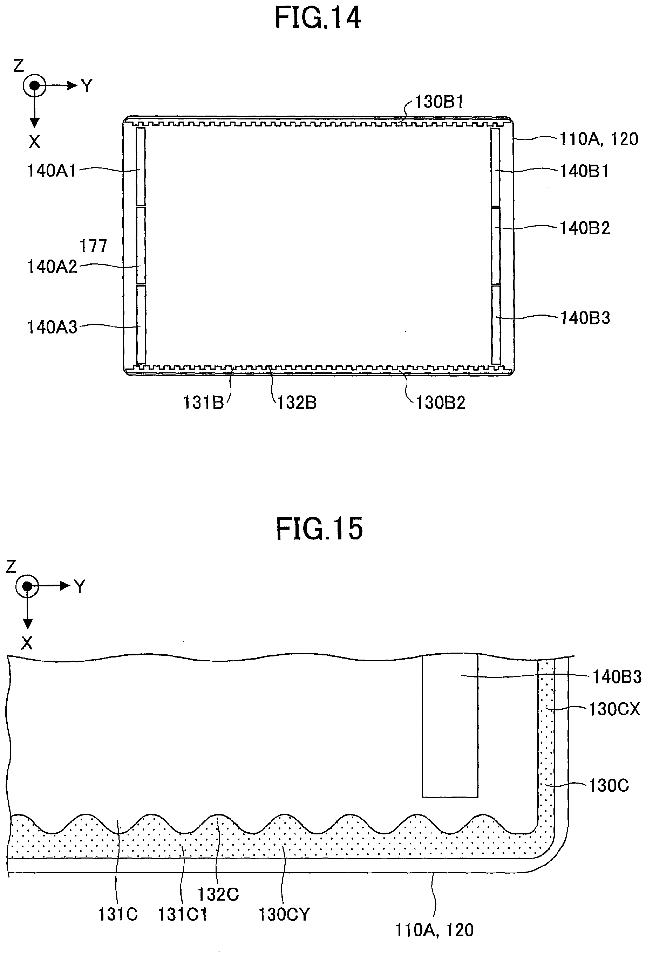

Further, a shape of the double-faced adhesive tape 130A in a plan view may be modified as illustrated in FIG. 14 to FIG. 17, for example.

FIG. 14 to FIG. 17 are diagrams illustrating variation examples of the first embodiment. Elements other than double-faced adhesive tapes 130B1, 130B2, 130C, 130D, and 130E illustrated in FIG. 14 to FIG. 17 are similar to those illustrated in FIG. 10. Therefore, only the differences will be described here.

The double-faced adhesive tapes 130B1 and 130B2 illustrated in FIG. 14 have a shape, where the sections 130AY of the double-faced adhesive tape 130A illustrated in FIG. 10 are present and the sections 130AX are removed. That is, each of the double-faced adhesive tapes 130B1 and 130B2 have recessed parts 131B and protruding parts 132B, similar to the recessed parts 131A and the protruding parts 132A, and have a base part, similar to the base part 130A1.

In this way, by using the double-faced adhesive tapes 130B1 and 130B2 corresponding to the sections 130AY to fix the top panel 120 to the housing 110A so as to respectively locate the recessed parts 131B and the protruding parts 132B at antinodes and nodes of a standing wave, favorable vibration characteristics can be obtained.

Note that a gap occurs between the top panel 120 and the housing 110A at a section in the X axis direction because the double-faced adhesive tapes 130B1 and 130B2 attach the top panel 120 to the housing 110A in the Y axis direction.

Hence, the structure illustrated in FIG. 14, in which the top panel 120 is fixed to the housing 110A by the double-faced adhesive tapes 130B1 and 130B2, may be used in an environment that does not require a preventive measure against dust and/or a preventive measure against water or in an environment where a preventive measure against dust and/or a preventive measure against water is taken by a configuration not illustrated in FIG. 14.

The double-faced adhesive tape 130C illustrated in FIG. 15 is obtained by making the shape of the recessed parts 131A and the protruding parts 132A of the double-faced adhesive tape 130A into a sinusoidal shape. The double-faced adhesive tape 130C has sections 130CX extending in the X direction and sections 130CY extending in the Y direction. The section 130CY has recessed parts 131C, protruding parts 132C, and a base part 131C1 similar to the base part 130A1. The recessed parts 131C and the protruding parts 132C are successively formed to be sinusoidal in a plan view.

Such a double-faced adhesive tape 130C can be created by forming sinusoidal recessed parts 131C and protruding parts 132C on a double-faced adhesive tape having a constant width in the longitudinal direction, for example.

By using such a double-faced adhesive tape 130C to fix the top panel 120 to the housing 110A so as to respectively locate the recessed parts 131C and the protruding parts 132C at antinodes and nodes of a standing wave, favorable vibration characteristics can be obtained.

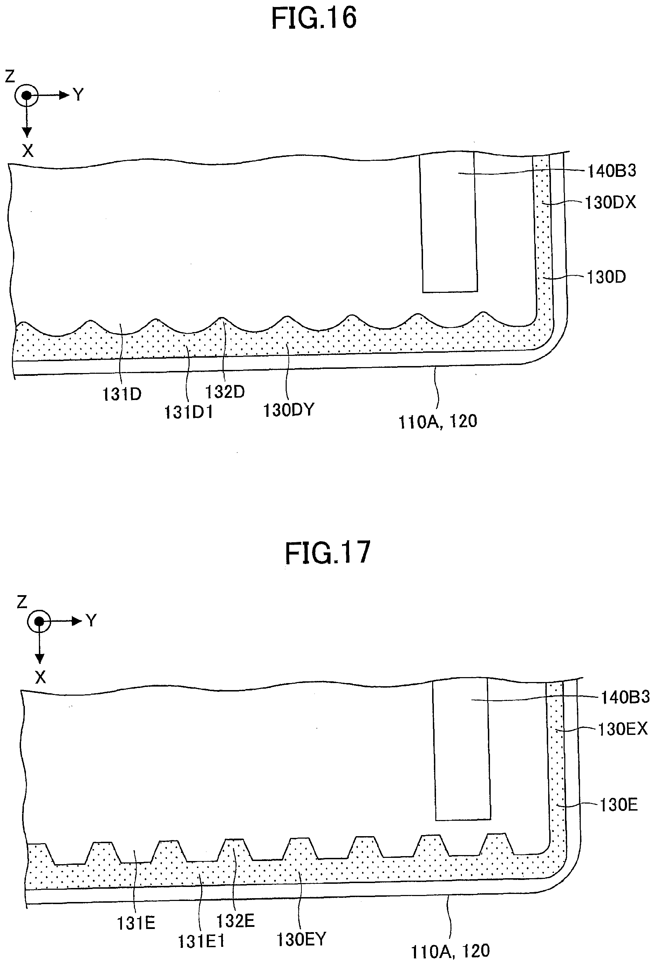

The double-faced adhesive tape 130D illustrated in FIG. 16 is obtained by making the shape of the recessed parts 131A and the protruding parts 132A of the double-faced adhesive tape 130A into a wavy shape. The double-faced adhesive tape 130D has sections 130DX extending in the X direction and sections 130DY extending in the Y direction. The section 130DY has recessed parts 131D, protruding parts 132D, and a base part 131D1 similar to the base part 130A1. The recessed parts 131D and the protruding parts 132D are successively formed to be wavy in a plan view.

Such a double-faced adhesive tape 130D can be created by forming wavy recessed parts 131D and protruding parts 132D on a double-faced adhesive tape having a constant width in the longitudinal direction, for example.

By using such a double-faced adhesive tape 130D to fix the top panel 120 to the housing 110A so as to respectively locate the recessed parts 131D and the protruding parts 132D at antinodes and nodes of a standing wave, favorable vibration characteristics can be obtained.

The double-faced adhesive tape 130E illustrated in FIG. 17 is obtained by making the shape of the recessed parts 131A and the protruding parts 132A of the double-faced adhesive tape 130A into a trapezoidal square waveform.

The double-faced adhesive tape 130E has sections 130EX extending in the X direction and sections 130EY extending in the Y direction. The section 130EX has recessed parts 131E, protruding parts 132E, and a base part 131E1 similar to the base part 130A1. The recessed parts 131E and the protruding parts 132E are successively formed to be a trapezoidal square waveform in a plan view.

Such a double-faced adhesive tape 130E can be created by forming trapezoidal square recessed parts 131E and protruding parts 132E on a double-faced adhesive tape having a constant width in the longitudinal direction, for example.

By using such a double-faced adhesive tape 130E to fix the top panel 120 to the housing 110A so as to respectively locate the recessed parts 131E and the protruding parts 132E at antinodes and nodes of a standing wave, favorable vibration characteristics can be obtained.

<Second embodiment>

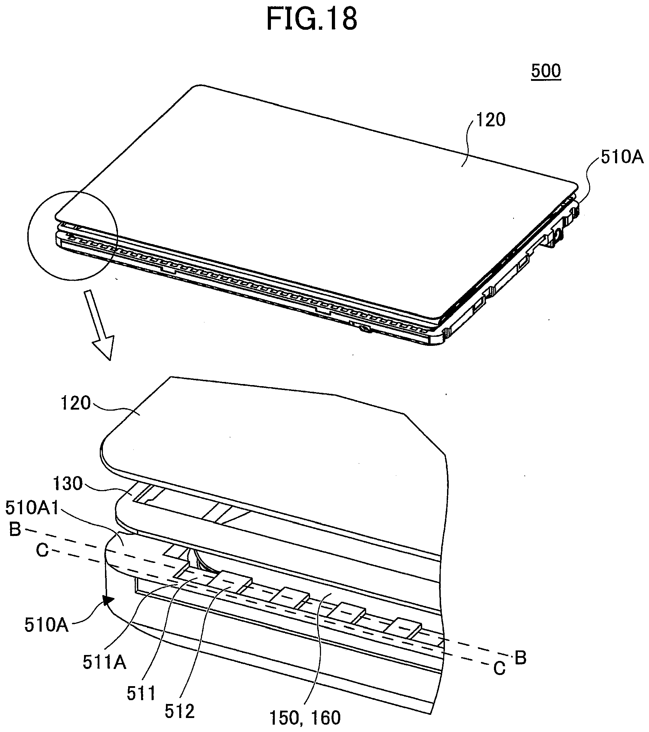

In the following, details of an attachment structure of an electronic device 500 according to a second embodiment will be described with reference to FIG. 18 to FIG. 32.

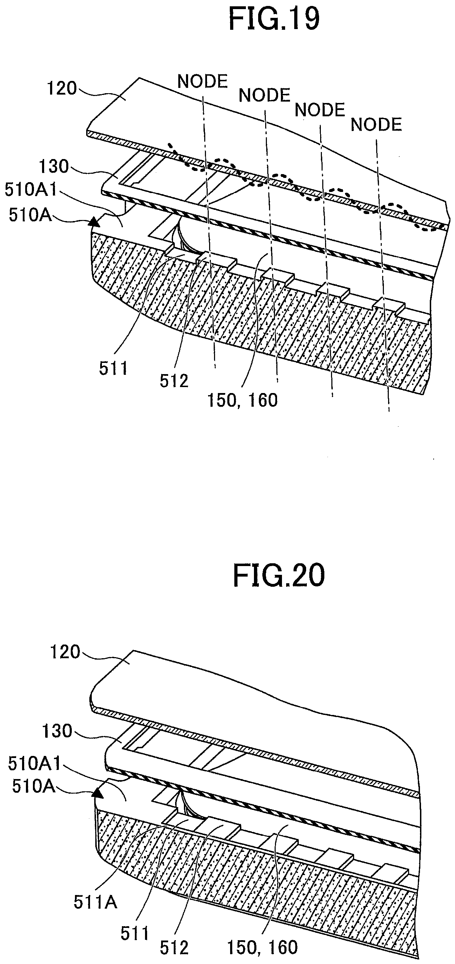

FIG. 18 is an exploded perspective view illustrating the electronic device 500 according to the second embodiment. FIG. 19 is a cross-sectional view taken along a line B-B of FIG. 18. FIG. 20 is a cross-sectional view taken along a line C-C of FIG. 18.

The electronic device 500 according to the second embodiment has a configuration where the housing 110A and the double-faced adhesive tape 130A of the electronic device 100 according to the first embodiment illustrated in FIG. 9 are replaced with a housing 510A and a double-faced adhesive tape 130. Because other configurations are similar to those of the electronic device 100 according to the first embodiment, the same reference numerals are given to the similar configuration elements such that their descriptions are omitted. Note that in FIG. 18, the housing 110B (see FIG. 9) is omitted.

According to the second embodiment, the housing 510A, the top panel 120, and the touch panel 150 constitute a coordinate detecting unit.

According to the electronic device 500 of the second embodiment, a structure of the housing 510A is shaped such that a force for fixing the housing 510A and the top panel 120 at positions of antinodes of a standing wave is weaker than a force for fixing the housing 510A and the top panel 120 at positions of nodes of the standing wave. Further, a tape having a constant width is used as the double-faced adhesive tape 130.

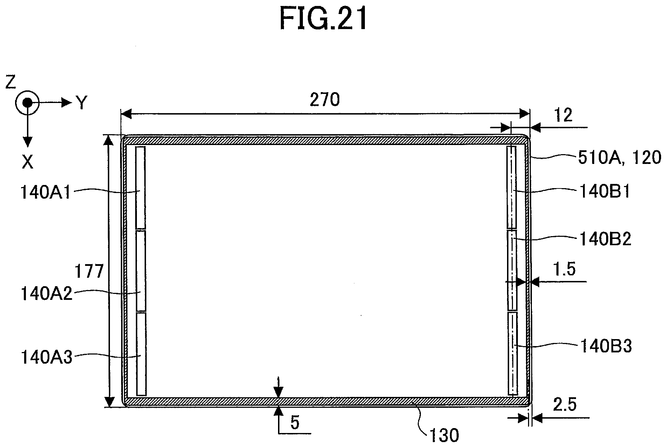

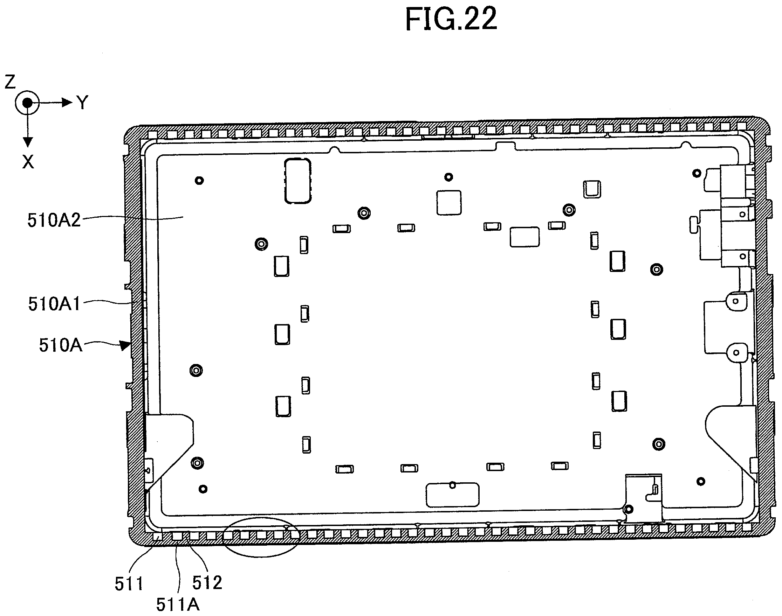

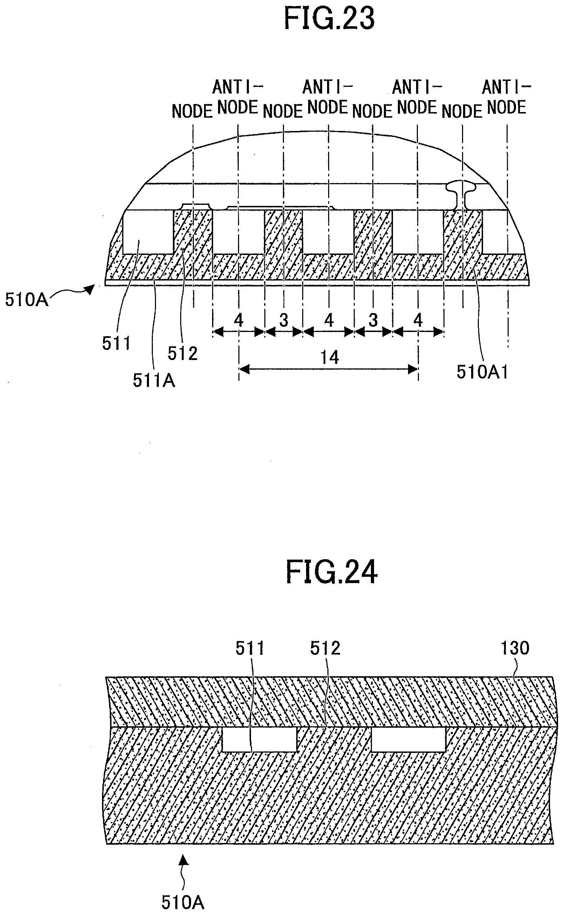

The following descriptions will be given with reference to FIG. 21 to FIG. 24 in addition to FIG. 18 to FIG. 20. FIG. 21 is a diagram illustrating a positional relationship between the housing 510A, the top panel 120, and the double-faced adhesive tape 130. FIG. 22 is a plan view illustrating the housing 510A. FIG. 23 is an enlarged view of a part of FIG. 22. FIG. 24 is a diagram illustrating a cross sectional structure of a state in which the top panel 120 is fixed to the housing 510A by the double-faced adhesive tape 130. Note that in FIG. 22, only the housing 510A is illustrated, and the touch panel and the display panel 160 are omitted.

The enlarged view at the lower side of FIG. 18 is an enlarged view of the portion, enclosed by the circle, of the electronic device 500 illustrated in the upper side of FIG. 18.

Similar to the housing 110A, the touch panel 150, the display panel 160, and the like are mounted on the housing 510A.

The housing 510A has an attachment part 510A1 having a rectangular ring shape to which the double-faced adhesive tape 130 is attached. The attachment part 510A1 has a shape similar to the double-faced adhesive tape 130 having a rectangular ring shape in a plan view, and is a portion that encloses the touch panel 150 and the display panel 160 in the plan view. The shape of the attachment part 510A1 in the plan view is as illustrated by the diagonal lines in FIG. 22.

The touch panel 150 and the display panel 160 are mounted on the housing 510A while being housed in a recessed part 510A2 (see FIG. 22) located inside the attachment part 510A1 in a plan view. The attachment part 510A1 is a portion to which the top panel 120 is attached via the double-faced adhesive tape 130.

As illustrated by the diagonal lines in FIG. 21, the double-faced adhesive tape 130 has a rectangular-ring shape in a plan view, and has constant widths at both the sections extending in the X axis direction and the sections extending in the Y axis direction, respectively. The widths of the sections extending in the X axis direction are 1.5 mm, and the widths of the sections extending in the Y axis direction are 5 mm. Further, here, in a state in which the top panel 120 is fixed to the housing 510A by the double-faced adhesive tape 130, the double-faced adhesive tape 130 is not housed inside recessed parts 511.

As illustrated in FIG. 18 to FIG. 20, the housing 510A has the recessed parts 511 and flat parts 512 at the section extending in the Y axis direction of the attachment part 510A1. Note that in FIG. 19, a standing wave generated at the top panel 120 is represented by the broken line and positions of the antinodes and nodes are illustrated.

The recessed parts 511 are portions where parts of the attachment part 510A1 are recessed in the thickness direction, and are formed at constant intervals along the Y axis direction. The flat parts 512 are portions where the recessed parts 511 are not formed on the section extending in the Y axis direction of the attachment part 510A1.

The recessed parts 511 are formed from inside the attachment part 510A1 having a rectangular-ring shape in a plan view, and an outside part of the attachment part 510A1 remains to be a rib. This outside part is a rib part 511A.

The rib part 511A is illustrated in FIG. 20, which illustrates the cross-sectional view taken along the line C-C of FIG. 18, but is not illustrated in FIG. 19, which illustrates the cross-sectional view taken along the line B-B of FIG. 18.

When the top panel 120 is fixed to such a housing 510A through the double-faced adhesive tape 130, a force for fixing the top panel 120 to the housing 510A at the positions where the recessed parts 511 are present is weaker than a force for fixing the top panel 120 to the housing 510A at the positions where the flat parts 512 are present.

As illustrated in FIG. 24, the double-faced adhesive tape 130 does not enter inside of the recessed parts 511. Thus, this is because an area in which the double-faced adhesive tape 130 fixes the top panel 120 to the housing 510A at the sections where the recessed parts 511 are present in the Y axis direction is smaller than that at the sections where the recessed parts 511 are not present (the sections where the flat parts 512 are present) in the Y axis direction.

Therefore, according to the second embodiment, the recessed parts 511 are arranged in accordance with positions of antinodes of standing waves, and the flat parts 522 are arranged in accordance with positions of nodes of the standing waves. More specifically, the centers of the widths of the recessed parts 511 in the Y axis direction are arranged in accordance with the positions at which the antinodes of a standing wave occur, and the centers of the widths of the flat parts 522 are arranged in accordance with the positions of the nodes of the standing wave.

By making the positions of the recessed parts 511 in accordance with the positions of the antinodes of a standing wave, the amplitude of the standing wave is further increased and favorable amplification characteristics of the standing wave are obtained. Further, by making the positions of the flat parts 522 in accordance with the positions of the nodes of a standing wave, the vibration of the standing wave at the nodes is further effectively reduced and favorable attenuation characteristics of the standing wave are obtained.

Due to such reasons, according to the second embodiment, the recessed parts 511 are arranged in accordance with antinodes of a standing wave and the flat parts 522 are arranged in accordance with nodes of the standing wave.

Note that a meaning of the positions of the nodes of a standing wave includes not only points at which the amplitude of the standing wave is zero but also includes sections where the amplitude is less than or equal to a predetermined value that is relatively small. Further, a meaning of the positions of the antinodes of a standing wave is, within a section of one period of the standing wave, sections, other than the positions of the nodes of the standing wave, or sections where the amplitude is greater than or equal to a predetermined value that is relatively large, including the positions at which the top of the antinodes of the standing wave occurs.

Arranging the recessed parts 511 in accordance with the positions of the antinodes of a standing wave means arranging the recessed parts 511 so as to have sections such that where the sections where the recessed parts 511 are present in the Y axis direction overlap with the sections of the positions of the above described antinodes.

Further, arranging the flat parts 522 in accordance with the positions of the nodes of a standing wave means arranging the flat parts 522 so as to have sections such that the sections where the flat parts 522 are present in the Y axis direction overlap with the sections of the positions of the above described nodes.

Here, similar to the first embodiment, as the top panel 120, glass is used of which a length in the X direction (length of short sides) is 177 mm, a length in the Y direction (length of long sides) is 270 mm, and a thickness (thickness in the Z axis direction) is 0.7 mm. For example, reinforced glass of Dragontrail (registered trademark) is used.

Sizes and positions of the vibrating elements 140A1 to 140B3 attached to the top panel 120 are similar to those of the first embodiment. Further, the vibrating elements 140A1 to 140B3 are driven by a driving signal of 35.2 kHz.

Under such conditions, as illustrated in FIG. 23, sizes of the recessed parts 511 and the flat parts 522 are set.

Because two antinodes and two nodes are included in one period of a standing wave, the recessed parts 511 and the flat parts 522 may be respectively arranged to correspond to the antinodes and the nodes. Hence, the lengths of the recessed parts 511 and the flat parts 522 in the Y axis direction may be set such that a length in the Y axis direction of a recessed part 511, a flat part 522, the next recessed part 511, and the next flat part 522 that are continuous is one wavelength of a standing wave (14 mm). Here, for example, the lengths of the recessed parts 511 in the Y axis direction are set to be 4 mm, and the lengths of the flat parts 522 in the Y axis direction are set to be 3 mm.

Note that the widths of the recessed parts 511 and the flat parts 522 in the X axis direction may be set to be appropriate values depending on a relationship with vibration characteristics.

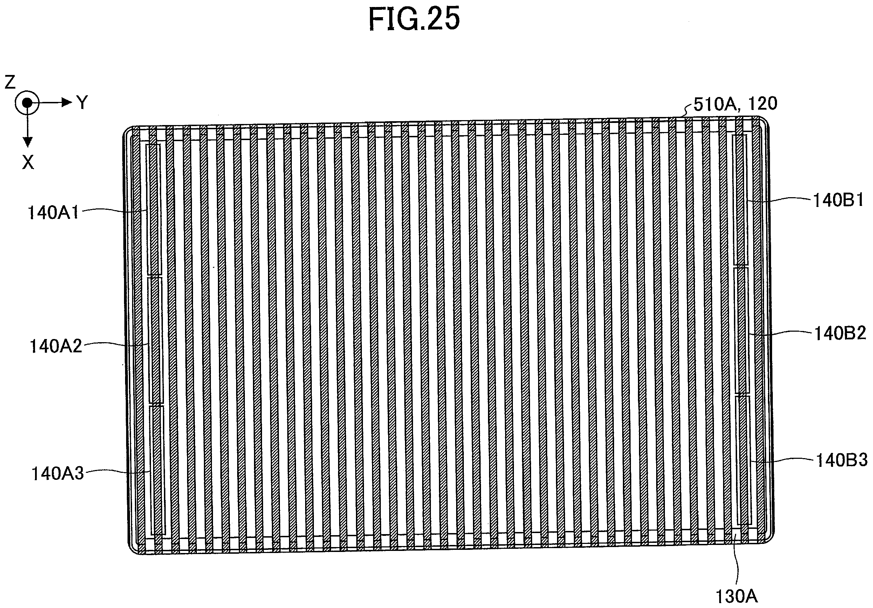

In a state in which the top panel 120 is fixed to the housing 510A by use of the above described double-faced adhesive tape 130, upon driving the vibrating elements 140A1 to 140B3 at a frequency of 35.2 kHz, antinodes and nodes of a standing wave occur as illustrated in FIG. 25 at the electronic device 500.

FIG. 25 is a diagram illustrating a standing wave generated at the top panel 120 of the electronic device 500. In FIG. 25, portions where the antinodes occur are illustrated by hatching and portions where the nodes occur are illustrated by white.

As illustrated in FIG. 25, the antinodes occur at the sections where the recessed parts 511 are provided, and the nodes occur at the sections where the flat parts 522 are provided.

Hence, by attaching the top panel 120 to the housing 510A through the double-faced adhesive tape 130, the amplitude of the antinodes of a natural vibration (standing wave) in the ultrasound frequency band can be further increased and the amplitude of the nodes can be effectively reduced.

Therefore, according to the second embodiment, the top panel 120 is fixed to the housing 510A by the double-faced adhesive tape 130A having the recessed parts 11, arranged at the positions corresponding to the antinodes of standing waves, and the flat parts 522, arranged at the positions corresponding to the nodes of the standing waves. Thereby, it is possible to provide the electronic device 500 and a coordinate detecting unit such that favorable vibration characteristics are obtained.

Further, because the attachment part 510A1 of the housing 510A has a rectangular-ring shape in a plan view, it is possible to ensure, in a state in which the top panel 120 is attached to the housing 510A by the double-faced adhesive tape 130, a waterproofing property and a dust resistance with respect to internal space in the housing 510A.

Further, because the electronic device 500 according to the second embodiment generates the natural vibration in the ultrasound frequency band of the top panel 120 to change the kinetic friction force applied to the user's fingertip, it is possible to provide a favorable tactile sensation to the user.

Further, according to the electronic device 500 of the second embodiment, effects similar to those of the electronic device 100A of the first embodiment are obtained in addition to the above described effects.

As described above, according to the second embodiment, it is possible to provide the electronic device 500 and a coordinate detecting unit having favorable vibration characteristics and being able to provide favorable tactile sensations.

Note that the dimensions of the respective parts illustrated in FIG. 23 are examples, and the embodiment is not limited to the above described dimensions. The dimensions of the respective parts may be set to be appropriate values in accordance with dimensions and materials of the top panel 120 and the housing 510A, a type, a size, and positions of the vibrating elements 140A1 to 140B3, a frequency of a driving signal, and the like.

Further, in the embodiment described above, the rib part 511A is disposed at the sections where the recessed parts 511 are present in the Y axis direction. However, without forming the rib part 511A, the attachment part 510A1 may be formed such that the recessed parts 511 separate the attachment part 510A1 over the X axis direction. Such a structure may be used in an environment that does not require a preventive measure against dust and/or a preventive measure against water or in an environment where a preventive measure against dust and/or a preventive measure against water is taken by a configuration that is not the electronic device 500.

In the embodiment described above, the double-faced adhesive tape 130 does not enter inside of the recessed parts 511 as illustrated in FIG. 24.

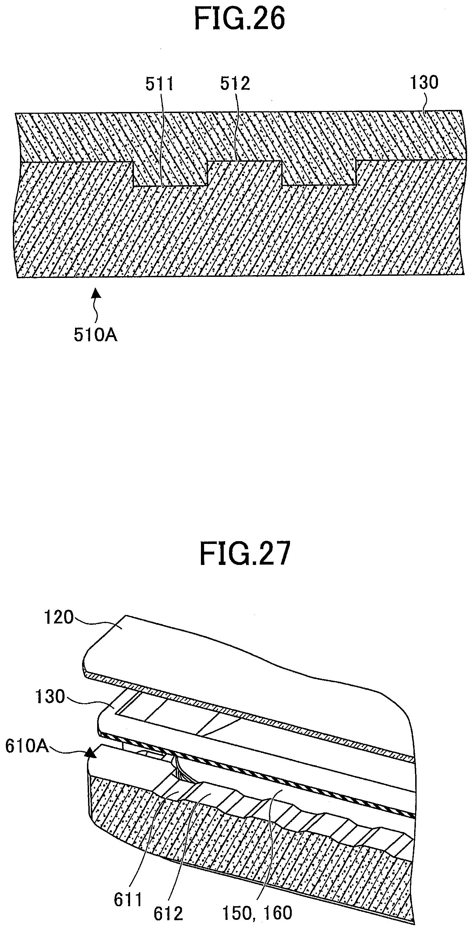

However, in a case where elasticity of the double-faced adhesive tape 130 is low (weak), the double-faced adhesive tape 130 may enter inside of the recessed parts 511. Here, with reference to FIG. 26, a case will be described in which the double-faced adhesive tape 130 enters inside of the recessed parts 511.

FIG. 26 is a diagram illustrating a cross sectional structure of a state in which the top panel 120 is fixed to the housing 510A by the double-faced adhesive tape 130.

In a case where the double-faced adhesive tape 130 is comparatively soft, the double-faced adhesive tape 130 enters inside of the recessed parts 511 as illustrated in FIG. 26. In such a case, the double-faced adhesive tape 130 is compressed at the sections, where the recessed parts 511 are not present (the sections where the flat parts 512 are present) in the Y axis direction, relative to the sections where the recessed parts 511 are present in the Y axis direction.

Hence, even when the double-faced adhesive tape 130 enters inside of the recessed parts 511, a force by which the double-faced adhesive tape 130 fixes the top panel 120 to the housing 510 at the sections where the recessed parts 511 are present in the Y axis direction is smaller than that at the sections where the recessed parts 511 are not present (the sections where the flat parts 512 are present) in the Y axis direction.

Therefore, even when the double-faced adhesive tape 130 enters inside of the recessed parts 511, it is possible to provide the electronic device 500 and a coordinate detecting unit having favorable vibration characteristics similar to a case in which the double-faced adhesive tape 130 does not enter inside of the recessed parts 511.

Further, a shape of the double-faced adhesive tape 130A in a plan view may be modified as illustrated in FIG. 27 to FIG. 32, for example.

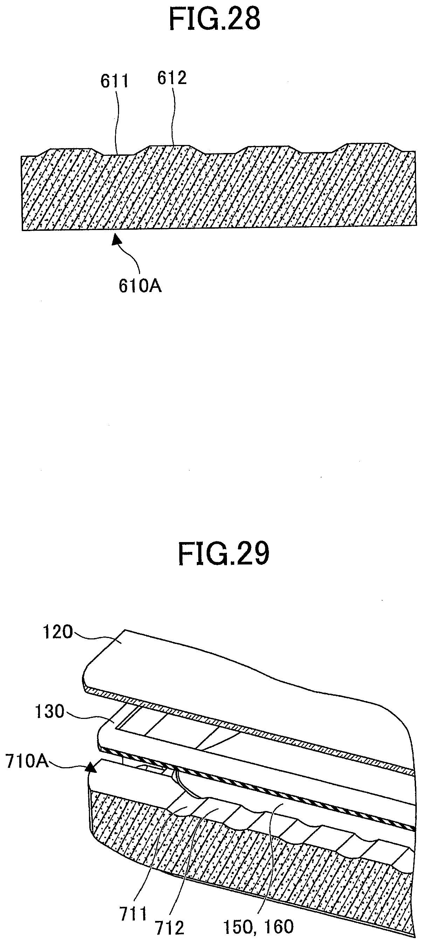

FIG. 27 to FIG. 32 are diagrams illustrating variation examples of the second embodiment. FIG. 27 to FIG. 32 illustrate cross sectional configurations similar to that of FIG. 19. FIG. 27, FIG. 29, and FIG. 31 are perspective views and FIG. 28, FIG. 30, and FIG. 32 are cross sectional views as viewed from a positive side in the X axis direction.

Elements other than housings 610A, 710A, and 810A illustrated in FIG. 27 to FIG. 32 are similar to those illustrated in FIG. 18 to FIG. 21. Therefore, only the differences will be described here.

The housing 610A illustrated in FIG. 27 and FIG. 28 has recessed parts 611, obtained by deforming the shape of the recessed parts 511 of the housing 510A illustrated in FIG. 18 to FIG. 20, and flat parts 612. In the recessed parts 611, wall parts adjacent to the flat parts 612 are formed obliquely.

Note that similar to the cross section illustrated in FIG. 19, FIG. 27 and FIG. 28 illustrate cross sections corresponding to the cross-section taken along line B-B of FIG. 18. Therefore, although a rib part, similar to the rib part 511A illustrated in FIG. 18 and FIG. 20, is omitted in FIG. 27 and FIG. 28, the housing 610A has a rib part, similar to the rib part 511A.

By using such a housing 610A to fix the top panel 120 through the double-faced adhesive tape 130 so as to respectively locate the recessed parts 611 and the flat parts 612 at antinodes and nodes of a standing wave, favorable vibration characteristics can be obtained.

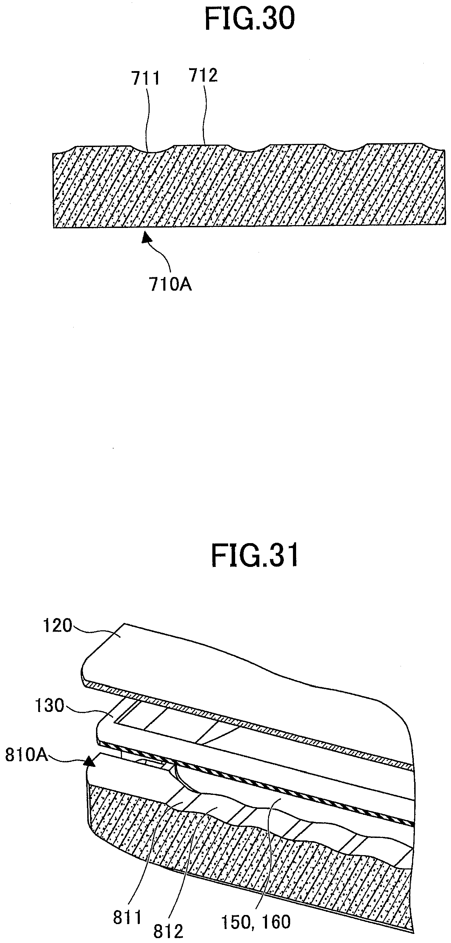

The housing 710A illustrated in FIG. 29 and FIG. 30 has recessed parts 711, obtained by deforming the shape of the recessed parts 511 of the housing 510A illustrated in FIG. 18 to FIG. 20, and flat parts 712. The recessed parts 711 are formed to be curvedly recessed to curve towards the negative side in the Z axis direction.

Note that similar to the cross section illustrated in FIG. 19, FIG. 29 and FIG. 30 illustrate cross sections corresponding to the cross-section taken along line B-B of FIG. 18. Therefore, although a rib part, similar to the rib part 511A illustrated in FIG. 18 and FIG. 20, is omitted in FIG. 29 and FIG. 30, the housing 710A has a rib part, similar to the rib part 511A.

By using such a housing 710A to fix the top panel 120 through the double-faced adhesive tape 130 so as to respectively locate the recessed parts 711 and the flat parts 712 at antinodes and nodes of a standing wave, favorable vibration characteristics can be obtained.

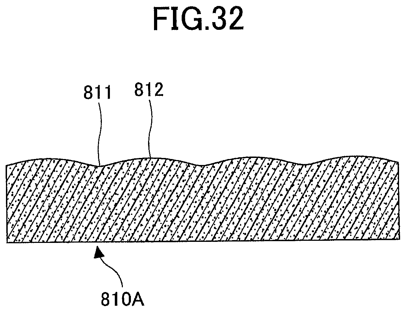

The housing 810A illustrated in FIG. 31 and FIG. 32 has recessed parts 811, obtained by deforming the shape of the recessed parts 511 of the housing 510A illustrated in FIG. 18 to FIG. 20, and protruding parts 812. The recessed parts 811 are formed to be curvedly recessed to curve towards the negative side in the Z axis direction. The protruding parts 812 are formed to curvedly protrude to curve towards the positive side in the Z axis direction.

Note that similar to the cross section illustrated in FIG. 19, FIG. 31 and FIG. 32 illustrate cross sections corresponding to the cross-section taken along line B-B of FIG. 18. Therefore, although a rib part, similar to the rib part 511A illustrated in FIG. 18 and FIG. 20, is omitted in FIG. 31 and FIG. 32, the housing 810A has a rib part, similar to the rib part 511A.

By using such a housing 810A to fix the top panel 120 through the double-faced adhesive tape 130 so as to respectively locate the recessed parts 811 and the protruding parts 812 at antinodes and nodes of a standing wave, favorable vibration characteristics can be obtained.

Although examples of an electronic device, a coordinate detecting unit, and an adhesive member according to the embodiments of the present invention have been described above, the present invention is not limited to the embodiments specifically disclosed and various variations and modifications may be made without departing from the scope of the claims.

**Description of Reference Symbols**

100 electronic device
110, 110A, 110B housing
120 top panel
120C periodic structure
130, 130A, 130B1, 130B2, 130C, 130D, 130E double-faced adhesive tape
130A1 base part
131A, 131B, 131C, 131D, 131E recessed part
132A, 132B, 132C, 132D, 132E protruding part
140 140A1, 140A2, 140A3, 140B1, 140B2 140B3 vibrating element
150 touch panel
160 display panel
170 substrate
200 controlling part
220 application processor
230 communication processor
240 drive controlling part
250 memory
300 drive controlling apparatus
310 sinusoidal wave generator
320 amplitude modulator
500 electronic device

510A, 610A, 710A, 810A housing
511, 611, 711, 811 recessed part
512, 612, 712 flat part
510A1 attachment part
511A rib part
812 protruding part

**Claims**

1. An electronic device comprising:

   a display part;
   a top panel disposed on a display surface side of the display part and having a manipulation surface;
   a coordinate detector configured to detect coordinates of a manipulation input performed on the manipulation surface;
   a vibrating element configured to generate a vibration at the manipulation surface;
   a drive controlling part configured to drive the vibrating element by using a driving signal for generating a natural vibration at the manipulation surface, the drive controlling part being configured to drive the vibrating element such that an intensity of the natural vibration changes in accordance with a position of the manipulation input performed on the manipulation surface and in accordance with a degree of time change of the position; and
   a housing to which the top panel is attached,
   wherein the top panel is fixed to the housing along an edge side of the top panel, and a first fixing force at first positions where antinodes of the natural vibration occur is smaller than a second fixing force at second positions where nodes of the natural vibration occur.

2. The electronic device according to claim 1, further comprising:

   an adhesive member that fixes the top panel to the housing, a first width of the adhesive member at the first positions being narrower than a second width of the adhesive member at the second positions,
   wherein the first fixing force is a fixing force by which the adhesive member fixes the top panel to the housing at first sections of the first width, and
   wherein the second fixing force is a fixing force by which the adhesive member fixes the top panel to the housing at second sections of the second width.

3. The electronic device according to claim 2, wherein the adhesive member has a shape, in which a recess-protrusion pattern is repeated, constituted by recessed parts at the first sections and protruding parts at the second sections.

4. The electronic device according to claim 2 or 3,
   wherein the top panel is rectangular in a plan view, and
   wherein the adhesive member attaches the top panel to the housing along two edge sides opposite to each other of the rectangular top panel.

5. The electronic device according to claim 1, further comprising:

   an adhesive member,
   wherein the housing includes an attachment part to which the top panel is attached, the attachment part having attachment surfaces located at the second positions and having recessed parts recessed relative to the attachment surfaces, the recessed parts being provided at the first positions,
   wherein the adhesive member is provided over the first positions and the second positions to fix the top panel and the housing,
   wherein the first fixing force is a fixing force by which the top panel and the housing are fixed at the first positions where the recessed parts are provided, and
   wherein the second fixing force is a fixing force by which the top panel and the housing are fixed at the second positions where the attachment surface are provided.

6. The electronic device according to claim 5, wherein, with respect to an extending direction of the attachment part, a width at sections where the recessed parts are provided is narrower than the width of the attachment part at sections where the attachment surfaces are provided

7. The electronic device according to claim 5 or 6, wherein the attachment part further has, outside the recessed parts at the first positions in a width direction, a rib part that is equal to the attachment surfaces in height.

8. The electronic device according to any one of claims 1 to 7, wherein the vibrating element is attached to the top panel at a position where a node of the natural vibration occurs at the manipulation surface of the top panel.

9. The electronic device according to any one of claims 1 to 8, wherein the natural vibration is a natural vibration in an ultrasound frequency band.

10. A coordinate detecting unit comprising:

a top panel having a manipulation surface;
a coordinate detector configured to detect coordinates of a manipulation input performed on the manipulation surface;
a vibrating element configured to generate a vibration at the manipulation surface;
a drive controlling part configured to drive the vibrating element by using a driving signal for generating a natural vibration at the manipulation surface, the drive controlling part being configured to drive the vibrating element such that an intensity of the natural vibration changes in accordance with a position of the manipulation input performed on the manipulation surface and in accordance with a degree of time change of the position; and
a housing to which the top panel is attached,
wherein the top panel is fixed to the housing along an edge side of the top panel, and a first fixing force at first positions where antinodes of the natural vibration occur is smaller than a second fixing force at second positions where nodes of the natural vibration occur.

11. An adhesive member for fixing a top panel, having a manipulation surface, and a housing along an edge side of the top panel, a natural vibration being generated at the manipulation surface by a vibrating element, the top panel being fixed to the housing,
wherein a first width at first positions is narrower than a second width at second positions such that a first fixing force at the first positions where antinodes of the natural vibration occur is smaller than a second fixing force at the second positions where nodes of the natural vibration occur.

# FIG.1

# FIG.2

# FIG.3

# FIG.4

(A)

120

(B)

120

EP 3 279 775 A1

# FIG.5

(A)

120

HIGH FRICTION    VIBRATION OFF

LOW FRICTION    VIBRATION ON

(B)

120

LOW FRICTION    VIBRATION ON

HIGH FRICTION    VIBRATION OFF

EP 3 279 775 A1

FIG.6

EP 3 279 775 A1

# FIG.7

(A)

| MOVING SPEED | AMPLITUDE VALUE |
|---|---|
| $0 \leqq V < b1$ | 0 |
| $b1 \leqq V < b2$ | A1 |
| $b2 \leqq V < b3$ | A2 |
|  |  |

(B)

| APPLICATION ID | AREA DATA | VIBRATION PATTERN |
|---|---|---|
| 1 | f1=(X,Y) | P1 |
| 1 | f2=(X,Y) | P2 |
| 1 | f3=(X,Y) | P3 |
| 1 | f4=(X,Y) | P4 |
|  |  |  |

# FIG.8

START

S1

OBTAIN POSITION DATA
AND AREA DATA

S2

MOVING SPEED
IS GREATER THAN OR
EQUAL TO PREDETER-
MINED THRESHOLD
SPEED?

NO

YES

S3

CALCULATE
ESTIMATED POSITION

S4

ESTIMATED
POSITION IS WITHIN
PREDETERMINED
AREA?

NO

YES

S7

SET
AMPLITUDE VALUE TO ZERO

S5

CALCULATE
AMPLITUDE VALUE

S6

OUTPUT AMPLITUDE DATA

END

# FIG.9

# FIG.10

# FIG.11

FIG.12

EP 3 279 775 A1

FIG.13

21 PERIOD
(41.5 kHz)
20.5 PERIOD
(39.5 kHz)
20 PERIOD
(37.5 kHz)
19.5 PERIOD
(35.5 kHz)
19 PERIOD
(33.5 kHz)
18.5 PERIOD
(31.5 kHz)

ANTINODE   NODE   ANTINODE   NODE   ANTINODE   ANTINODE
NODE   ANTINODE   NODE   NODE   ANTINODE   NODE   ANTINODE

Y/mm

# FIG.14

Z → Y
X

130B1

110A, 120

140A1

140B1

140B2

177
140A2

140A3

140B3

131B    132B    130B2

# FIG.15

Z → Y
X

140B3

130CX

130C

132C

131C    131C1    130CY

110A, 120

# FIG.16

Z → Y
X

140B3
130DX
130D

131D  132D
131D1  130DY
110A, 120

# FIG.17

Z → Y
X

140B3
130EX
130E

131E  132E  130EY
131E1
110A, 120

# FIG.18

500

120

510A

120

130

510A1

B

C

510A

511A

511

512

150, 160

B
C

# FIG.19

# FIG.20

# FIG.21

# FIG.22

EP 3 279 775 A1

# FIG.23

# FIG.24

FIG.25

EP 3 279 775 A1

# FIG.26

511    512                130

510A

# FIG.27

120

130

610A

611  612  150, 160

# FIG.28

611   612

610A

# FIG.29

120

130

710A

711   712   150, 160

# FIG.30

711   712

710A

# FIG.31

120

130

810A

811   812   150, 160

# FIG.32

811    812

810A

## INTERNATIONAL SEARCH REPORT

International application No.

PCT/JP2015/060432

A.  CLASSIFICATION OF SUBJECT MATTER
*G06F3/041(2006.01)i*

According to International Patent Classification (IPC) or to both national classification and IPC

B.  FIELDS SEARCHED

Minimum documentation searched (classification system followed by classification symbols)
G06F3/041-3/0489

Documentation searched other than minimum documentation to the extent that such documents are included in the fields searched
Jitsuyo Shinan Koho           1922-1996    Jitsuyo Shinan Toroku Koho   1996-2015
Kokai Jitsuyo Shinan Koho     1971-2015    Toroku Jitsuyo Shinan Koho   1994-2015

Electronic data base consulted during the international search (name of data base and, where practicable, search terms used)
JSTPlus(JDreamIII)

C.  DOCUMENTS CONSIDERED TO BE RELEVANT

| Category* | Citation of document, with indication, where appropriate, of the relevant passages | Relevant to claim No. |
|---|---|---|
| A | JP 2014-63992 A  (Panasonic Corp.), 10 April 2014 (10.04.2014), fig. 2, 6, 7 & US 2013/0271412 A1 fig. 2, 6A to 7B & US 2014/0028157 A1 fig. 2, 6A to 7B & JP 5343179 B1          & JP 2014-99210 A & WO 2013/057940 A1     & CN 103282868 A & CN 103529990 A | 1-11 |

☒  Further documents are listed in the continuation of Box C.          ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered  to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 June 2015 (09.06.15) | 16 June 2015 (16.06.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

## INTERNATIONAL SEARCH REPORT

International application No.

PCT/JP2015/060432

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2012/053202 A1  (Kyocera Corp.), 26 April 2012 (26.04.2012), fig. 1 to 11 & US 2013/0215080 A1 fig. 1 to 11 & EP 2631745 A1 fig. 1 to 11 & JP 5452729 B2         & CN 103189820 A & TW 201218040 A | 1-11 |
| A | JP 2015-41289 A  (SMK Corp.), 02 March 2015 (02.03.2015), paragraphs [0033] to [0049] & US 2015/0054756 A1 paragraphs [0048] to [0064] | 1-11 |
| A | JP 2011-96183 A  (SMK Corp.), 12 May 2011 (12.05.2011), paragraphs [0019] to [0028] & US 2011/0102341 A1 paragraphs [0030] to [0044] & US 2011/0102342 A1 paragraphs [0027] to [0038] & US 2011/0102343 A1 paragraphs [0024] to [0033] & EP 2325731 A1 paragraphs [0014] to [0027] & EP 2325732 A1 paragraphs [0018] to [0027] & EP 2325733 A1 paragraphs [0017] to [0028] | 1-11 |

Form PCT/ISA/210 (continuation of second sheet) (July 2009)

**REFERENCES CITED IN THE DESCRIPTION**

**Patent documents cited in the description**

• JP 5343179 B